# EUROPÄISCHE PATENTSCHRIFT

(11) **EP 4 618 032 B1**
(45) Veröffentlichungstag und Bekanntmachung des Hinweises auf die Patenterteilung: **18.11.2026**
(21) Anmeldenummer: 25163542.1
(22) Anmeldetag: 13.03.2025
(51) Int. Cl.: G06V 10/56, G06T 5/50, G06T 7/00, G06V 20/52, H04N 7/18, G06V 10/82, G06V 20/00, G06V 40/10, H04N 23/11, H04N 23/84

(54) **VERFAHREN ZUR ERZEUGUNG EINES FARBIGEN BILDS, COMPUTERPROGRAMMPRODUKT SOWIE SYSTEM ZUR ERZEUGUNG EINES FARBIGEN BILDS**
METHOD FOR CREATING A COLOURED IMAGE, COMPUTER PROGRAM PRODUCT AND SYSTEM FOR CREATING A COLOURED IMAGE
PROCÉDÉ DE GÉNÉRATION D'IMAGE COLORÉE, PRODUIT DE PROGRAMME INFORMATIQUE ET SYSTÈME DE GÉNÉRATION D'IMAGE COLORÉE

(30) Priorität: 15.03.2024 DE 102024107516
(43) Veröffentlichungstag der Anmeldung: 17.09.2025
(73) Patentinhaber: Carl Zeiss AG, 73447 Oberkochen (DE)
(72) Erfinder: MONTAG, Aaron, 73447 Oberkochen (DE); SHCHERBINA, Maria, 73447 Oberkochen (DE)
(74) Vertreter: Freischem & Partner Patentanwälte mbB

(56) Entgegenhaltungen:
- WO-A1-2015/157058
- WO-A1-2024/018449
- DE-A1- 102022 121 325
- US-A1- 2014 104 432
- US-A1- 2021 400 167
- US-A1- 2022 094 847
- RICHTER THOMAS: "DeOldify: Schwarz-Weiß Photos und Videos per KI kolorieren", SLASHCAM, 23 January 2020 (2020-01-23), pages 1 - 8, XP093379280, Retrieved from the Internet <URL:https://www.slashcam.de/artikel/Aktuelles/DeOldify--Schwarz- Weiss-Photos-und-Videos-per-KI-kolorieren--alles-.html> [retrieved on 20260319]

## Beschreibung

Die Erfindung betrifft ein Verfahren zur Erzeugung eines farbigen Bilds, das ein in einer Umgebung angeordnetes Objekt aufweist. Beispielsweise ist das Objekt ein Tier. Ferner ist beispielsweise die Umgebung die natürliche Umgebung des Tiers, insbesondere ein Wald. Darüber hinaus betrifft die Erfindung ein Computerprogrammprodukt mit einem Programmcode, der in eine Prozessoreinheit eines Systems ladbar ist und bei Ausführung das System derart steuert, dass ein erfindungsgemäßes Verfahren ausgeführt wird. Darüber hinaus betrifft die Erfindung ein System zur Erzeugung eines farbigen Bilds, wobei das System eine Kamera zur Aufnahme von Bildern und eine Prozessoreinheit mit einem Computerprogrammprodukt aufweist.

Aus dem Stand der Technik ist eine Wildkamera bekannt, die ein Objektiv, einen beweglich angeordneten Infrarotsperrfilter und eine optische Sensoreinheit aufweist. Ferner ist die bekannte Wildkamera mit mindestens einem Bewegungssensor ausgebildet. Die bekannte Wildkamera wird beispielsweise zur Aufnahme von wild lebenden Tieren und/oder in der biologischen Forschung zur Beobachtung von wild lebenden Tieren verwendet. Wenn der Bewegungssensor die Anwesenheit eines Tiers erkennt, so wird mit der Wildkamera ein Bild des Tiers aufgenommen. Genauer gesagt, wird mit dem Objektiv ein Bild des Tiers auf die optische Sensoreinheit abgebildet. Das Bild kann auf einer Speichereinheit gespeichert werden und/oder über eine drahtlose Verbindung an eine Empfangseinrichtung weitergeleitet werden.

Um die wild lebenden Tiere nicht zu stören, wird bei der bekannten Wildkamera auf einen normalen Lichtblitz verzichtet. Bei ausreichender Helligkeit ist die Erzeugung des Bilds mit ausreichender Qualität auch dann sicherlich möglich. In der Regel wird dann das Bild des Tiers mit dem sich im Strahlengang der Wildkamera angeordneten Infrarotsperrfilter aufgenommen. Das auf diese Weise erzeugte Bild des Tiers ist ein Farbbild. Mit anderen Worten ausgedrückt, ist das auf diese Weise erzeugte Bild farbig ausgestaltet.

Wenn die Helligkeit nicht mehr ausreichend ist (beispielsweise bei Dämmerung oder in der Nacht), wird in der Regel das Bild des Tiers ohne den Infrarotsperrfilter aufgenommen. Ferner wird das Bild des Tiers unter Nutzung einer an der Wildkamera angeordneten Nahinfrarotlichtquelle aufgenommen, welche das von ihr erzeugte Nahinfrarotlicht auf das Tier strahlt. Das Nahinfrarotlicht ist für das Tier in der Regel nicht störend. Das auf diese Weise erzeugte Bild des Tiers ist dann jedoch kein Farbbild, sondern ein Bild, welches die im Bild dargestellten Objekte in Grauabstufungen (im Extremfall schwarz oder weiß) darstellt. Aufgrund dieser Grauabstufungen erscheinen einem Betrachter des Bilds die im Bild dargestellten Objekte nicht der Realität entsprechend, da keine farbige Darstellung gegeben ist.

Hinsichtlich des Standes der Technik wird beispielhaft auf die EP 3 631 761 B1, die DE 10 2021 123 275 B3, die WO 2022/089535 A1, die CN 113298177 A, die CN 111709903 A, die CN 109949353 A, die US 2018/0338092 A1, die CN 105590305 A, die US 8,836,793 B1 sowie die US 2020/167972 A1 verwiesen.

Ferner wird hinsichtlich des Standes der Technik auf die US 2022/0094847 A1 sowie die US 2014/0104432 A1 und die WO 2015/157058 A1 verwiesen.

Der Erfindung liegt die Aufgabe zugrunde, ein Verfahren, ein Computerprogrammprodukt sowie ein System anzugeben, bei denen basierend auf einem Grauabstufungen aufweisenden Bild ein farbiges Bild erzeugt wird.

Diese Aufgabe wird erfindungsgemäß mit einem Verfahren mit den Merkmalen des Anspruchs 1 gelöst. Ein Computerprogrammprodukt mit einem Programmcode, der in eine Prozessoreinheit eines Systems zur Erzeugung eines farbigen Bilds ladbar ist und bei Ausführung das System derart steuert, dass ein erfindungsgemäßes Verfahren ausgeführt wird, ist durch die Merkmale des Anspruchs 14 gegeben. Ein erfindungsgemäßes System zur Erzeugung eines farbigen Bilds ist durch die Merkmale des Anspruchs 15 gegeben. Weitere Merkmale der Erfindung ergeben sich aus der nachfolgenden Beschreibung, den beigefügten Ansprüchen sowie den beigefügten Zeichnungen.

Das erfindungsgemäße Verfahren ist zur Erzeugung eines farbigen Bilds ausgelegt, wobei das farbige Bild ein in einer Umgebung angeordnetes Objekt aufweist.

Beispielsweise ist das Objekt ein Tier. Ferner ist beispielsweise die Umgebung die natürliche Umgebung des Tiers, beispielsweise ein Wald. Zur Aufnahme des Objekts wird eine Kamera verwendet. Die Kamera weist beispielsweise ein Objektiv, einen beweglich angeordneten Infrarotsperrfilter und/oder eine optische Sensoreinheit auf. Insbesondere ist die optische Sensoreinheit als ein Halbleiterelement ausgebildet, beispielsweise als ein CMOS. Darüber hinaus weist die Kamera beispielsweise mindestens einen Bewegungssensor zur Detektion einer Bewegung auf. Bei der Detektion einer Bewegung ist es insbesondere vorgesehen, ein Bild mit der Kamera aufzunehmen. Die vorgenannte Kamera ist insbesondere als Wildkamera ausgebildet und wird beispielsweise zur Aufnahme von wild lebenden Tieren und/oder in der biologischen Forschung zur Beobachtung von wild lebenden Tieren verwendet. Wenn der Bewegungssensor die Anwesenheit eines Tiers erkennt, so wird mit der Wildkamera ein Bild des Tiers aufgenommen. Genauer gesagt, wird mit dem Objektiv auf die optische Sensoreinheit ein Bild des Tiers abgebildet. Das Bild kann beispielsweise auf einer Speichereinheit gespeichert werden und/oder über eine drahtlose Verbindung an eine Empfangseinrichtung weitergeleitet werden.

Bei dem erfindungsgemäßen Verfahren erfolgt ein Aufnehmen eines ersten Bilds mit der Kamera. Das mit dem vorgenannten Verfahrensschritt aufgenommene erste Bild weist eine erste Menge an ersten Pixeln auf, die farbig ausgestaltet sind. Mit anderen Worten ausgedrückt, ist das erste Bild ein Farbbild, das sich aus den ersten Pixeln zusammensetzt. Ferner ist es vorgesehen, dass das erste Bild ausschließlich die Umgebung zeigt. Mit anderen Worten ausgedrückt, wird das Bild zu einem Zeitpunkt aufgenommen, zu welchem das Objekt sich nicht im Sichtfeld der Kamera befindet. Insofern zeigt das Bild nicht das Objekt, sondern nur die Umgebung im Sichtfeld der Kamera. Beispielsweise ist auf dem ersten Bild kein Tier abgebildet, sondern nur die natürliche Umgebung des Tiers, beispielsweise ein Waldstück, welches sich im Sichtfeld des Objektivs der Kamera befindet.

Beispielsweise wird das erste Bild bei einer ausreichend natürlichen Helligkeit aufgenommen, insbesondere bei Tageslicht. Die Aufnahme des ersten Bilds erfolgt demnach beispielsweise ohne die Verwendung eines Lichtblitzes. Insbesondere ist es vorgesehen, das erste Bild mit dem im Strahlengang der Kamera angeordneten Infrarotsperrfilter aufzunehmen. Das aufgenommene erste Bild ist ein Farbbild. Mit anderen Worten ausgedrückt, ist das aufgenommene erste Bild farbig ausgestaltet.

In einem weiteren Verfahrensschritt des erfindungsgemäßen Verfahrens erfolgt ein Aufnehmen eines zweiten Bilds mit der Kamera, wobei das zweite Bild zum einen die Umgebung und zum anderen ein in der Umgebung angeordnetes Objekt aufweist. Beispielsweise ist das Objekt ein Tier oder umfasst mehrere Tiere. Das zweite Bild weist eine zweite Menge an zweiten Pixeln auf, die nicht farbig ausgestaltet sind. Mit anderen Worten ausgedrückt, ist das in diesem Verfahrensschritt aufgenommene zweite Bild kein Farbbild, sondern ein Bild, das zum einen die Umgebung und zum anderen das in der Umgebung angeordnete Objekt in Grauabstufungen (im Extremfall schwarz oder weiß) darstellt.

Beispielsweise wird das zweite Bild ohne den Infrarotsperrfilter und unter Nutzung einer an der Kamera angeordneten Nahinfrarotlichtquelle aufgenommen, welche das von ihr erzeugte Nahinfrarotlicht auf das Objekt und die sich im Sichtfeld der Kamera befindende Umgebung strahlt. Das Nahinfrarotlicht ist beispielsweise für ein Tier in der Regel nicht störend.

Das zweite Bild wird insbesondere zu einem Zeitpunkt aufgenommen, zu dem die natürliche Helligkeit nicht derart ausreichend für eine Aufnahme des zweiten Bilds ist, um Konturen sowie Details der Umgebung und/oder des Objekts im zweiten Bild zu erkennen (beispielsweise bei Dämmerung oder in der Nacht). Wie oben erläutert, ist das zweite Bild jedoch kein Farbbild, sondern ein Bild, welches das im zweiten Bild dargestellte Objekt und dessen Umgebung in Grauabstufungen (im Extremfall schwarz oder weiß) darstellt.

In einem wiederum weiteren Verfahrensschritt des erfindungsgemäßen Verfahrens erfolgt ein Bestimmen einer ersten Untermenge der Menge an zweiten Pixeln des zweiten Bilds unter Verwendung einer Prozessoreinheit, wobei die erste Untermenge der Menge an zweiten Pixeln das Objekt darstellt. Mit anderen Worten ausgedrückt, werden bei diesem Verfahrensschritt diejenigen Pixel aus der Menge der zweiten Pixel identifiziert, welche im zweiten Bild ausschließlich das Objekt beinhalten (und nicht die Umgebung). Diese Pixel bilden dann die erste Untermenge der Menge an zweiten Pixeln. Ferner erfolgt ein Bestimmen einer zweiten Untermenge der Menge an zweiten Pixeln des zweiten Bilds unter Verwendung der Prozessoreinheit, wobei die zweite Untermenge der Menge an zweiten Pixeln die Umgebung darstellt. Mit anderen Worten ausgedrückt, werden bei diesem Verfahrensschritt diejenigen Pixel aus der Menge der zweiten Pixel identifiziert, welche im zweiten Bild ausschließlich die Umgebung beinhalten (und nicht das Objekt).

Die vorgenannte Prozessoreinheit ist beispielsweise eine Prozessoreinheit des erfindungsgemäßen Systems, welches weiter unten noch näher erläutert wird. Beispielsweise ist die Prozessoreinheit einteilig oder mehrteilig ausgebildet. Sie kann insbesondere an einem unterschiedlichen Ort als die vorgenannte Kamera angeordnet sein. Mit anderen Worten ausgedrückt, sind die Prozessoreinheit und die vorgenannte Kamera örtlich voneinander getrennt. Insbesondere kann die Entfernung zwischen der Prozessoreinheit und der vorgenannten Kamera mehr als 5 km, mehr als 10 km oder mehr als 50 km betragen. Eine Datenverbindung zwischen der Prozessoreinheit und der Kamera wird beispielsweise durch eine drahtlose Verbindung, insbesondere eine Funkverbindung oder eine Mobilfunkverbindung, bereitgestellt.

In einem wiederum weiteren Verfahrensschritt des erfindungsgemäßen Verfahrens erfolgt ein Bestimmen einer Untermenge der Menge an ersten Pixeln des ersten Bilds unter Verwendung der Prozessoreinheit. Mit anderen Worten ausgedrückt, werden einige Pixel aus der Menge der ersten Pixel des ersten Bilds bestimmt und bilden die vorgenannte Untermenge. Demnach umfasst die vorgenannte Untermenge eine geringere Anzahl an Pixeln als die Menge der ersten Pixel des ersten Bilds. Die vorgenannte Untermenge umfasst nur Pixel des ersten Bilds, die korrespondierenden Pixeln der Menge an zweiten Pixeln des zweiten Bilds entsprechen, wobei die korrespondierenden Pixel der Menge an zweiten Pixeln des zweiten Bilds ausschließlich die Umgebung aufweisen. Mit anderen Worten ausgedrückt, umfasst die bestimmte Untermenge der Menge an ersten Pixeln des ersten Bilds nur Pixel, welche die Umgebung zeigen. Die vorgenannte Untermenge umfasst keine Pixel, an deren Position im zweiten Bild das Objekt dargestellt ist. Die Art des Bestimmens der Untermenge der Menge an ersten Pixeln des ersten Bilds ist beliebig, sodass jede für die Erfindung geeignete Art des Bestimmens verwendet werden kann. Insbesondere ist es vorgesehen, dass die Pixel der vorgenannten Untermenge unter Verwendung eines Zufallsgenerators bestimmt werden. Zusätzlich oder alternativ hierzu ist es vorgesehen, dass die Pixel der vorgenannten Untermenge gleichmäßig oder ungleichmäßig im ersten Bild verteilt sind.

In einem weiteren Verfahrensschritt des erfindungsgemäßen Verfahrens erfolgt ein Eingeben sowohl der Untermenge der Menge an ersten Pixeln des ersten Bilds als auch der zweiten Untermenge der Menge an zweiten Pixeln des zweiten Bilds als Eingangsgrößen in die Prozessoreinheit. Es erfolgt sodann unter Verwendung der Prozessoreinheit ein Berechnen einer Farbinformation für mindestens ein Pixel der zweiten Untermenge der Menge an zweiten Pixeln des zweiten Bilds auf Basis mindestens eines Pixels der Untermenge der Menge an ersten Pixeln des ersten Bilds. Mit anderen Worten ausgedrückt, werden sowohl die Untermenge der Menge an ersten Pixeln des ersten Bilds als auch die zweite Untermenge der Menge an zweiten Pixeln des zweiten Bilds als Eingangsgrößen in die Prozessoreinheit eingegeben. Die Prozessoreinheit berechnet nun mindestens eine Ausgangsgröße, nämlich eine Farbinformation für mindestens ein Pixel der zweiten Untermenge der Menge an zweiten Pixeln des zweiten Bilds auf Basis mindestens eines Pixels der Untermenge der Menge an ersten Pixeln des ersten Bilds. Somit erhält das Pixel der zweiten Untermenge der Menge an zweiten Pixeln des zweiten Bilds eine Farbinformation, obwohl dieses Pixel ursprünglich nur eine Information hinsichtlich einer Grauabstufung aufweist.

In einem noch weiteren Verfahrensschritt des erfindungsgemäßen Verfahrens erfolgt ein Erzeugen des farbigen Bilds des in der Umgebung angeordneten Objekts unter Verwendung der Prozessoreinheit auf Basis des zweiten Bilds sowie auf Basis der Farbinformation des mindestens einen Pixels der zweiten Untermenge der Menge an zweiten Pixeln des zweiten Bilds. Mit anderen Worten ausgedrückt, wird mittels der Prozessoreinheit basierend zum einen auf dem zweiten Bild, das nicht farbig ausgestaltet ist, und zum anderen auf der berechneten Farbinformation des mindestens einen Pixels der zweiten Untermenge der Menge an zweiten Pixeln des zweiten Bilds das farbige Bild erzeugt, welches zum einen die Umgebung und zum anderen das in der Umgebung angeordnete Objekt darstellt. Mittels des erfindungsgemäßen Verfahrens wird die Umgebung im erzeugten farbigen Bild farbig dargestellt.

Mit dem erfindungsgemäßen Verfahren ist es demnach sichergestellt, basierend auf einem Bild mit Grauabstufungen ein farbiges Bild zu erzeugen. Dabei wird im Unterschied zum bekannten Stand der Technik eine Untermenge der Menge an ersten Pixeln des ersten Bilds verwendet, wobei die Pixel dieser Untermenge Farbinformationen aufweisen. Diese Farbinformationen werden dazu verwendet, eine Farbinformation für mindestens ein Pixel des zweiten, nicht farbigen Bilds zu berechnen, um letztendlich ein farbiges Bild, das eine farbige Umgebung und ein in der Umgebung angeordnetes Objekt aufweist, zu erzeugen.

Nachfolgend wird das erfindungsgemäße Verfahren nochmals mit anderen Worten erläutert. Bei dem erfindungsgemäßen Verfahren wird zunächst zu einem ersten Zeitpunkt ein erstes Bild mit ersten Pixeln unter Verwendung der Kamera aufgenommen, wobei das erste Bild ausschließlich eine Umgebung zeigt. Ein interessierendes Objekt wird bei der Aufnahme des ersten Bilds nicht mit aufgenommen. Das erste Bild ist ein farbiges Bild. Ferner wird bei dem erfindungsgemäßen Verfahren zu einem zweiten Zeitpunkt, der unterschiedlich zum ersten Zeitpunkt ist, ein zweites Bild mit zweiten Pixeln unter Verwendung der Kamera aufgenommen, wobei das zweite Bild sowohl die Umgebung als auch ein Objekt aufweist, an welchem man interessiert ist. Beispielsweise ist das Objekt ein Tier. Das zweite Bild ist kein farbiges Bild, sondern ein Bild mit Grauabstufungen (im Extremfall schwarz oder weiß). Ferner ist es bei dem erfindungsgemäßen Verfahren vorgesehen, einige der Pixel des ersten Bilds zu bestimmen. Diese Pixel weisen jeweils eine Farbinformation auf. Ferner werden diese Pixel als erste Eingabegröße in die Prozessoreinheit eingegeben. Darüber hinaus werden diejenigen Pixel des zweiten Bilds, welche das Objekt nicht darstellen, als zweite Eingabegröße in die Prozessoreinheit eingegeben. Die Prozessoreinheit wird nun dazu verwendet, auf Basis der ersten Eingabegröße (also auf Basis der bestimmten Pixel des ersten Bilds mit der Farbinformation) eine Farbinformation für mindestens eines der Pixel des zweiten Bilds, vorzugsweise für mehrere der Pixel des zweiten Bilds oder vorzugsweise für jedes Pixel des zweiten Bilds zu berechnen, wobei die vorgenannten Pixel des zweiten Bilds nur diejenigen Pixel des zweiten Bilds sind, welche ausschließlich die Umgebung betreffen (und nicht das Objekt). Im Anschluss daran wird mittels der Prozessoreinheit ein farbiges Bild, welches zum einen die Umgebung und zum anderen das in der Umgebung angeordnete Objekt aufweist, auf Basis des zweiten Bilds und auf Basis der berechneten Farbinformation für das mindestens eine Pixel des zweiten Bilds, für die mehreren Pixel des zweiten Bilds oder für jedes Pixel des zweiten Bilds erzeugt, wobei diese Pixel ausschließlich die Umgebung betreffen (und nicht das Objekt). Somit wird die Umgebung im zweiten Bild farbig dargestellt.

Bei einer Ausführungsform des erfindungsgemäßen Verfahrens ist es zusätzlich oder alternativ vorgesehen, dass das Aufnehmen des ersten Bilds mit der Kamera zu einem ersten Zeitpunkt erfolgt und dass das Aufnehmen des zweiten Bilds mit der Kamera zu einem zweiten Zeitpunkt erfolgt, der unterschiedlich zum ersten Zeitpunkt ist. Beispielsweise ist der erste Zeitpunkt zu einer Tageszeit, zu welcher das erste Bild bei einer ausreichend natürlichen Helligkeit aufgenommen werden kann, so dass ausreichend Konturen und Details im ersten Bild zu erkennen sind. Beispielsweise ist der erste Zeitpunkt zu einer Tageszeit, zu welcher es hell ist und in der Regel die Sonne scheint. Ferner ist beispielsweise der zweite Zeitpunkt zu einer Tageszeit, zu welcher es nicht hell ist, insbesondere in der Nacht. Der erste Zeitpunkt und der zweite Zeitpunkt können beispielsweise in der Größenordnung von Stunden oder Tagen auseinanderliegen.

Bei einer weiteren Ausführungsform des erfindungsgemäßen Verfahrens ist es zusätzlich oder alternativ vorgesehen, dass das Aufnehmen des ersten Bilds mit der Kamera derart erfolgt, dass jedes Pixel der ersten Menge an ersten Pixeln eine Farbinformation sowie eine Ortsinformation hinsichtlich seiner Lage im ersten Bild aufweist. Zusätzlich oder alternativ hierzu ist es vorgesehen, dass das Aufnehmen des zweiten Bilds mit der Kamera derart erfolgt, dass jedes Pixel der zweiten Menge an zweiten Pixeln eine Graustufeninformation sowie eine Ortsinformation hinsichtlich seiner Lage im zweiten Bild aufweist.

Bei einer wiederum weiteren Ausführungsform des erfindungsgemäßen Verfahrens ist es zusätzlich oder alternativ vorgesehen, dass das oben erläuterte Berechnen der Farbinformation derart erfolgt, dass eine Farbinformation für jedes Pixel der zweiten Untermenge der Menge an zweiten Pixeln des zweiten Bilds unter Verwendung der Prozessoreinheit berechnet wird. Mit anderen Worten ausgedrückt, werden sowohl die Untermenge der Menge an ersten Pixeln des ersten Bilds als auch die zweite Untermenge der Menge an zweiten Pixeln des zweiten Bilds als Eingangsgrößen in die Prozessoreinheit eingegeben. Die Prozessoreinheit berechnet nun Ausgangsgrößen, nämlich jeweils eine Farbinformation für jedes Pixel der zweiten Untermenge der Menge an zweiten Pixeln des zweiten Bilds auf Basis mindestens eines Pixels, mehrerer Pixel oder aller Pixel der Untermenge der Menge an ersten Pixeln des ersten Bilds. Somit erhält jedes Pixel der zweiten Untermenge der Menge an zweiten Pixeln des zweiten Bilds eine Farbinformation, obwohl dieses Pixel ursprünglich nur eine Information hinsichtlich einer Grauabstufung (im Extremfall schwarz oder weiß) aufweist.

Bei einer noch weiteren Ausführungsform des erfindungsgemäßen Verfahrens ist es zusätzlich oder alternativ vorgesehen, dass das Berechnen der Farbinformation für das mindestens eine Pixel der zweiten Untermenge der Menge an zweiten Pixeln des zweiten Bilds auf Basis der Untermenge der Menge an ersten Pixeln des ersten Bilds erfolgt. Mit anderen Worten ausgedrückt, erfolgt das vorgenannte und weiter oben erläuterte Berechnen auf Basis der Gesamtheit der Untermenge der Menge an ersten Pixeln des ersten Bilds. Insofern werden beim Berechnen alle Pixel verwendet, die bestimmt und der Untermenge der Menge an ersten Pixeln des ersten Bilds zugeordnet wurden.

Bei einer Ausführungsform des erfindungsgemäßen Verfahrens ist es zusätzlich oder alternativ vorgesehen, dass das vorgenannte Berechnen unter Verwendung (i) eines mathematischen Modells, (ii) von maschinellem Lernen und/oder (iii) eines künstlichen neuronalen Netzwerks erfolgt. Mit anderen Worten ausgedrückt, berechnet beispielsweise eine künstliche Intelligenz auf Basis der vordefinierten und weiter oben oder weiter unten erläuterten Eingangsgrößen eine ganz bestimmte weiter oben oder weiter unten erläuterte Ausgangsgröße oder mehrere ganz bestimmte weiter oben oder weiter unten erläuterte Ausgangsgrößen. Mit dieser/diesen Ausgangsgröße(n) ist es möglich, das farbige Bild zu erzeugen. Zusätzlich oder alternativ hierzu ist es vorgesehen, dass das vorgenannte Berechnen unter Verwendung (i) eines einzigen mathematischen Modells und/oder (ii) eines einzigen künstlichen neuronalen Netzwerks erfolgt. Mit anderen Worten ausgedrückt, verwendet die Prozessoreinheit zur Berechnung der Farbinformation nur ein einziges mathematisches Modell und/oder nur ein einziges künstliches neuronales Netzwerk.

Bei einer weiteren Ausführungsform des erfindungsgemäßen Verfahrens ist es zusätzlich oder alternativ vorgesehen, auch das Objekt in dem zu erzeugenden Bild farbig darzustellen. Hierzu ist es bei dieser Ausführungsform des erfindungsgemäßen Verfahrens vorgesehen, dass ein Laden von Farbinformationen hinsichtlich des Objekts für die erste Untermenge der Menge an zweiten Pixeln des zweiten Bilds aus einer Speichereinheit in die Prozessoreinheit erfolgt. Wie weiter oben oder weiter unten ausgeführt, umfasst die erste Untermenge der Menge an zweiten Pixeln des zweiten Bilds das Objekt. Ferner erfolgt bei dieser Ausführungsform des erfindungsgemäßen Verfahrens ein Berechnen einer Farbinformation für mindestens ein Pixel der ersten Untermenge der Menge an zweiten Pixeln des zweiten Bilds auf Basis der geladenen Farbinformationen unter Verwendung der Prozessoreinheit. Mit anderen Worten ausgedrückt, wird mindestens einem Pixel der vorgenannten ersten Untermenge eine Farbinformation zugeordnet, sodass das Objekt farbig dargestellt werden kann. Vorzugsweise wird eine Farbinformation für mehrere der Pixel oder für jedes der Pixel der ersten Untermenge der Menge an zweiten Pixeln des zweiten Bilds auf Basis der geladenen Farbinformationen unter Verwendung der Prozessoreinheit berechnet. Beispielsweise erfolgt das Berechnen der Farbinformation derart, dass sowohl die Pixel der ersten Untermenge der Menge an zweiten Pixeln des zweiten Bilds als auch die geladenen Farbinformationen als Eingangsgrößen in die Prozessoreinheit eingegeben werden. Die Prozessoreinheit berechnet nun Ausgangsgrößen, nämlich jeweils eine Farbinformation für mindestens (a) ein Pixel oder (b) für mehrere Pixel oder (c) für jedes Pixel der ersten Untermenge der Menge an zweiten Pixeln des zweiten Bilds auf Basis der geladenen Farbinformationen. Somit erhält ein Pixel der ersten Untermenge der Menge an zweiten Pixeln des zweiten Bilds eine Farbinformation, obwohl dieses Pixel ursprünglich nur eine Information hinsichtlich einer Grauabstufung aufweist. Beispielsweise ist es zusätzlich oder alternativ vorgesehen, dass das vorgenannte Berechnen unter Verwendung (i) eines mathematischen Modells, (ii) von maschinellem Lernen und/oder (iii) eines künstlichen neuronalen Netzwerks erfolgt. Mit anderen Worten ausgedrückt, berechnet beispielsweise eine künstliche Intelligenz auf Basis der vordefinierten und weiter oben oder weiter unten erläuterten Eingangsgrößen eine ganz bestimmte weiter oben oder weiter unten erläuterte Ausgangsgröße oder mehrere ganz bestimmte weiter oben oder weiter unten erläuterte Ausgangsgrößen. Mit dieser/diesen Ausgangsgröße(n) ist es möglich, das farbige Bild zu erzeugen. Zusätzlich oder alternativ hierzu ist es vorgesehen, dass das vorgenannte Berechnen unter Verwendung (i) eines einzigen mathematischen Modells und/oder (ii) eines einzigen künstlichen neuronalen Netzwerks erfolgt. Mit anderen Worten ausgedrückt, verwendet die Prozessoreinheit zur Berechnung der Farbinformation nur ein einziges mathematisches Modell und/oder nur ein einziges künstliches neuronales Netzwerk. Insbesondere ist es bei dieser Ausführungsform des erfindungsgemäßen Verfahrens vorgesehen, dass das Erzeugen des farbigen Bilds, das zum einen die Umgebung und zum anderen das in der Umgebung angeordnete Objekt aufweist, unter Verwendung der berechneten Farbinformation für das mindestens eine Pixel der ersten Untermenge der Menge an zweiten Pixeln des zweiten Bilds erfolgt. Vorzugsweise erfolgt das Erzeugen des farbigen Bilds unter Verwendung der berechneten Farbinformationen für die mehreren Pixel oder für jedes der Pixel der ersten Untermenge der Menge an zweiten Pixeln des zweiten Bilds. Das Objekt wird dann farbig im erzeugten farbigen Bild dargestellt.

Wie oben bereits erläutert, ist es bei einer wiederum weiteren Ausführungsform des erfindungsgemäßen Verfahrens zusätzlich oder alternativ vorgesehen, dass das Berechnen auf Basis der geladenen Farbinformation derart unter Verwendung der Prozessoreinheit erfolgt, dass eine Farbinformation für jedes Pixel der ersten Untermenge der Menge an zweiten Pixeln des zweiten Bilds berechnet wird. Das Erzeugen des farbigen Bilds, das zum einen die Umgebung und zum anderen das in der Umgebung angeordnete Objekt aufweist, erfolgt unter Verwendung der Farbinformation für jedes Pixel der ersten Untermenge der Menge an zweiten Pixeln des zweiten Bilds.

Bei einer noch weiteren Ausführungsform des erfindungsgemäßen Verfahrens ist es zusätzlich oder alternativ vorgesehen, dass das erzeugte farbige Bild auf einer Anzeigeeinheit dargestellt wird. Beispielsweise ist die Anzeigeeinheit ein Bildschirm einer mobilen Kommunikationseinheit, insbesondere eines tragbaren Telefons und/oder eines Tablet-Computers.

Bei einer Ausführungsform des erfindungsgemäßen Verfahrens ist es zusätzlich oder alternativ vorgesehen, dass das Aufnehmen des ersten Bilds mit der Kamera nicht nur ein Aufnehmen eines einzelnen ersten Bilds, sondern ein Aufnehmen mehrerer erster Bilder umfasst. Jedes Bild der mehreren ersten Bilder zeigt ausschließlich die Umgebung des Objekts und somit nicht das Objekt selbst. Mit anderen Worten ausgedrückt, wird jedes der mehreren ersten Bilder zu Zeitpunkten aufgenommen, zu welchen das Objekt sich nicht im Sichtfeld der Kamera befindet. Insofern zeigt jedes Bild der mehreren ersten Bilder nicht das Objekt, sondern nur die Umgebung im Sichtfeld der Kamera. Beispielsweise ist auf jedem der mehreren ersten Bilder kein Tier abgebildet, sondern nur die natürliche Umgebung des Tiers, beispielsweise ein Waldstück, welches sich im Sichtfeld des Objektivs der Kamera befindet. Beispielsweise werden die mehreren ersten Bilder bei einer ausreichend natürlichen Helligkeit aufgenommen. Auf die oben gemachten Ausführungen wird verwiesen, die auch hier gelten. Ferner erfolgt bei dieser Ausführungsform des erfindungsgemäßen Verfahrens ein Bestimmen eines Bilds der aufgenommenen mehreren ersten Bilder unter Verwendung der Prozessoreinheit. Dieses bestimmte Bild wird dann für das erfindungsgemäße Verfahren verwendet. Insbesondere erfolgt das Bestimmen der Untermenge der Menge an ersten Pixeln derart, dass eine Untermenge der Menge an ersten Pixeln des bestimmten Bilds der mehreren ersten Bilder bestimmt wird. Beispielsweise ist es bei dieser Ausführungsform des erfindungsgemäßen Verfahrens vorgesehen, dass das Bild der mehreren ersten Bilder durch einen Benutzer oder durch die Prozessoreinheit ausgewählt wird. Insbesondere wird das Bild der mehreren ersten Bilder ausgewählt, welches den besten Kontrast aufweist. Alternativ ist es beispielsweise vorgesehen, zwei oder mehr Bilder der mehreren ersten Bilder unter Verwendung der Prozessoreinheit derart miteinander zu kombinieren, dass insbesondere Störungen (beispielsweise Schattierungen, Streulicht oder nicht interessierende Objekte) im kombinierten Bild nicht mehr oder kaum noch sichtbar sind. Insbesondere ist es vorgesehen, dass das Bestimmen des Bilds der mehreren ersten Bilder derart erfolgt, dass das Bild unter Verwendung der Prozessoreinheit auf Basis der mehreren ersten Bilder berechnet wird.

Die weiter oben und weiter unten genannte Kamera ist in der Regel ortsfest ausgebildet. Das erste Bild und das zweite Bild werden daher in der Regel mit demselben Sichtfeld der Kamera aufgenommen. Aufgrund von äußeren Umständen kann es jedoch dazu kommen, dass die Kamera sich zwischen einem ersten Zeitpunkt, zu welchem das erste Bild aufgenommen wird, und zu einem zweiten Zeitpunkt, zu welchem das zweite Bild aufgenommen wird, ein wenig bewegt, sodass das Sichtfeld der Kamera zu dem ersten Zeitpunkt und zu dem zweiten Zeitpunkt etwas unterschiedlich ist. Zur Berücksichtigung dieses Effekts ist es bei einer weiteren Ausführungsform des erfindungsgemäßen Verfahrens vorgesehen, dass das aufgenommene erste Bild und das aufgenommene zweite Bild zueinander ausgerichtet werden. Mit anderen Worten ausgedrückt, wird jedem Pixel der ersten Menge an ersten Pixeln des ersten Bilds genau ein korrespondierendes Pixel der zweiten Menge an zweiten Pixeln des zweiten Bilds unter Verwendung der Prozessoreinheit zugeordnet. Mit wiederum anderen Worten ausgedrückt, entspricht nach der Zuordnung jedes Pixel des ersten Bilds einem korrespondierenden Pixel des zweiten Bilds. Beispielsweise ist es vorgesehen, eine Transformationsfunktion Φ zu ermitteln, so dass die ersten Pixel des ersten Bilds den zweiten Pixeln des zweiten Bilds entsprechen (also die ersten Pixel des ersten Bilds mit den zweiten Pixeln des zweiten Bilds korrespondieren). Dies erfolgt beispielsweise durch Minimierung des folgenden mathematischen Ausdrucks: $\begin{matrix}{\sum }_{l ∈ \left\{x, y\right\}} {\left‖\left|{∇}_{l}Bild1\right|-\left|{∇}_{l}Bild2\left(Φ\right)\right|\right‖}^{2} \\ = {\sum }_{l ∈ \left\{x, y\right\}} {\left‖\left|{∇}_{l}Bild1\right|\right‖}^{2} - 2 \left〈\left|{∇}_{l}Bild1\right|, \left|{∇}_{l}Bild2\left(Φ\right)\right|\right〉 + {\left‖\left|{∇}_{l}Bild2\left(Φ\right)\right|\right‖}^{2}\end{matrix}$ wobei
- Bild1 und Bild2 jeweils ein monochromatisches Pixelbild in gleicher Auflösung sind;
- Bild2(Φ) ein Pixelbild mit der gleichen Auflösung bezeichnet, welches durch eine örtliche Transformation Φ von Bild2 entstanden ist;
- ∇ₓ und ∇_{y} pixelweise Richtungsableitungen eines monochromatischen Bilds sind;
- |∇*ₗBild*| jeweils der pixelweise Absolutbetrag einer Richtungsableitung ist;
- ∥*A*∥² die Summe aller quadrierten Pixelwerte eines Bildes A bezeichnet; sowie
- 〈*A, B*〉 das vektorielle Skalarprodukt zweier als Vektoren aufgefasster Bilder A und B ist.

Die Minimierung des vorstehenden Ausdrucks ist äquivalent zu der Maximierung des Ausdrucks 〈|∇*ₗBild*1|, |∇*ₗBild*2(Φ)|〉*,* also der Korrelation der beiden absoluten Gradienten. Mit anderen Worten ausgedrückt, wird Bild2 derart verschoben, dass dessen absolute Gradienten mit denen von Bild1 soweit wie möglich übereinstimmen.

Es kann vorkommen, dass gewisse Details der im zweiten Bild dargestellten Umgebung nicht sehr deutlich zu erkennen sind. Dies ist beispielsweise dadurch bedingt, dass das zweite Bild bei nicht ausreichender Helligkeit, insbesondere in der Nacht aufgenommen wird. Um diesem Effekt entgegenzuwirken, ist es bei dem erfindungsgemäßen Verfahren vorgesehen, das zweite Bild vor dem Eingeben der zweiten Untermenge der Menge an zweiten Pixeln des zweiten Bilds als Eingangsgröße in die Prozessoreinheit zu bearbeiten. Wenn ein Pixel der Untermenge der Menge an zweiten Pixeln des zweiten Bilds ein vorgebbares Qualitätskriterium nicht erfüllt, wird dieses Pixel unter Verwendung der Prozessoreinheit ausgewählt. Das ausgewählte Pixel wird dann mit einem korrespondierenden Pixel der ersten Menge an ersten Pixeln des ersten Bilds unter Verwendung der Prozessoreinheit vermengt. Mit anderen Worten ausgedrückt, wird das ausgewählte Pixel der zweiten Untermenge der Menge an zweiten Pixeln des zweiten Bilds (also ein Pixel, das ausschließlich die Umgebung betrifft), mit Informationen über die Helligkeit eines zu dem ausgewählten Pixel korrespondierenden Pixels der ersten Menge an ersten Pixeln des ersten Bilds (wobei auch das korrespondierende Pixel ebenfalls ausschließlich die Umgebung betrifft) angereichert. Beispielsweise erfolgt das Vermengen durch ein Ersetzen. Mit anderen Worten ausgedrückt, wird im zweiten Bild ein Pixel, das ausschließlich die Umgebung betrifft, durch ein mit diesem Pixel korrespondierenden Pixel des ersten Bilds (wobei das korrespondierende Pixel ebenfalls ausschließlich die Umgebung betrifft) ersetzt, wenn das Pixel im zweiten Bild das vorgebbare Qualitätskriterium nicht erfüllt. Alternativ hierzu ist es beispielsweise vorgesehen, dass das Vermengen durch ein Alpha-Blending erzeugt wird. Beim Alpha-Blending wird dem ausgewählten Pixel der zweiten Untermenge der Menge an zweiten Pixeln des zweiten Bilds eine gemischte Information auf Basis der Helligkeit des ausgewählten Pixels und des zum dem ausgewählten Pixel korrespondierenden Pixels der ersten Menge an ersten Pixeln des ersten Bilds zugeordnet. Das vorgebbare Qualitätskriterium ist abhängig vom Kontrast. Beispielsweise ist eine Gewichtung des Alpha-Blendings abhängig vom Kontrast.

Bei einer noch weiteren Ausführungsform des erfindungsgemäßen Verfahrens ist es zusätzlich oder alternativ vorgesehen, dass nach dem Aufnehmen des ersten Bilds mit der Kamera das erste Bild in einer Bildspeichereinheit gespeichert wird. Zum Bestimmen der Untermenge der Menge an ersten Pixeln des ersten Bilds wird das erste Bild von der Bildspeichereinheit in die Prozessoreinheit geladen. Beispielsweise ist die Bildspeichereinheit einteilig oder mehrteilig ausgebildet. Sie kann insbesondere an einem unterschiedlichen Ort als die vorgenannte Kamera angeordnet sein. Mit anderen Worten ausgedrückt, sind die Bildspeichereinheit und die vorgenannte Kamera örtlich voneinander getrennt. Insbesondere kann die Entfernung zwischen der Prozessoreinheit und der vorgenannten Kamera mehr als 5 km, mehr als 10 km oder mehr als 50 km betragen. Die Kamera, die Bildspeichereinheit und/oder die Prozessoreinheit sind beispielsweise drahtlos miteinander verbunden. Hinsichtlich möglicher drahtloser Verbindungen wird auf die Ausführungen weiter oben verwiesen, die auch hier gelten.

Bei einer Ausführungsform des erfindungsgemäßen Verfahrens ist es zusätzlich oder alternativ vorgesehen, dass die Kamera mehrere Kameraeinheiten aufweist. Beispielsweise weist die Kamera eine erste Kameraeinheit und eine zweite Kameraeinheit auf. Die Erfindung ist aber nicht auf zwei Kameraeinheiten eingeschränkt. Vielmehr kann jede Anzahl an Kameraeinheiten verwendet werden, welche für die Erfindung geeignet ist. Jede Kameraeinheit weist jeweils ein Objektiv auf. Beispielsweise sind die Kameraeinheiten derart zueinander angeordnet, dass die Achsen der Objektive der Kameraeinheiten parallel zueinander ausgerichtet sind. Bei dieser Ausführungsform des erfindungsgemäßen Verfahrens erfolgt ein Aufnehmen des ersten Bilds mit der ersten Kameraeinheit. Wie weiter oben bereits ausgeführt, weist das erste Bild die erste Menge an ersten Pixeln auf, die farbig ausgestaltet sind. Beispielsweise wird das erste Bild bei einer ausreichend natürlichen Helligkeit aufgenommen, insbesondere bei Tageslicht. Die Aufnahme des ersten Bilds erfolgt demnach beispielsweise ohne die Verwendung eines Lichtblitzes. Das aufgenommene erste Bild ist ein Farbbild. Mit anderen Worten ausgedrückt, ist das aufgenommene erste Bild farbig ausgestaltet. Das Aufnehmen des zweiten Bilds erfolgt bei dieser Ausführungsform des erfindungsgemäßen Verfahrens mit der zweiten Kameraeinheit, wobei das zweite Bild zum einen die Umgebung und zum anderen ein in der Umgebung angeordnetes Objekt aufweist. Beispielsweise ist das Objekt ein Tier oder umfasst mehrere Tiere. Wie oben bereits weiter ausgeführt, weist das zweite Bild die zweite Menge an zweiten Pixeln auf, die nicht farbig ausgestaltet sind. Mit anderen Worten ausgedrückt, ist das in diesem Verfahrensschritt aufgenommene zweite Bild kein Farbbild, sondern ein Bild, das zum einen die Umgebung und zum anderen das in der Umgebung angeordnete Objekt in Grauabstufungen (im Extremfall schwarz oder weiß) darstellt. Beispielsweise wird das zweite Bild unter Nutzung einer an der Kamera angeordneten Nahinfrarotlichtquelle aufgenommen, welche das von ihr erzeugte Nahinfrarotlicht auf das Objekt und die sich im Sichtfeld der zweiten Kameraeinheit befindende Umgebung strahlt. Das Nahinfrarotlicht ist beispielsweise für ein Tier in der Regel nicht störend. Das zweite Bild wird insbesondere zu einem Zeitpunkt aufgenommen, zu dem die natürliche Helligkeit nicht derart ausreichend für eine Aufnahme des zweiten Bilds ist, um Konturen sowie Details der Umgebung und/oder des Objekts im zweiten Bild zu erkennen (beispielsweise bei Dämmerung oder in der Nacht). Wie oben erläutert, ist das zweite Bild jedoch kein Farbbild, sondern ein Bild, welches das im zweiten Bild dargestellte Objekt und dessen Umgebung in Grauabstufungen (im Extremfall schwarz oder weiß) darstellt.

Bei einer weiteren Ausführungsform des erfindungsgemäßen Verfahrens ist es zusätzlich oder alternativ vorgesehen, dass die erste Menge der ersten Pixel des ersten Bilds beispielsweise unter Verwendung der Prozessoreinheit auf die zweite Menge der zweiten Pixel des zweiten Bilds skaliert wird. Zusätzlich oder alternativ hierzu ist es vorgesehen, dass die zweite Menge der zweiten Pixel des zweiten Bilds beispielsweise unter Verwendung der Prozessoreinheit auf die erste Menge der ersten Pixel des ersten Bilds skaliert wird.

Sämtliche vorstehenden und nachstehenden Ausführungsformen des erfindungsgemäßen Verfahrens sind nicht auf die erläuterte Reihenfolge der Verfahrensschritte beschränkt. Die Erfindung umfasst auch unterschiedliche Reihenfolgen der Verfahrensschritte, die im Sinne der Erfindung zur Lösung der Aufgabe geeignet sind. Alternativ oder zusätzlich ist bei dem erfindungsgemäßen Verfahren auch die parallele Ausführung von mindestens zwei Verfahrensschritten vorgesehen. Ferner sind die vorstehenden und nachstehenden Ausführungsformen des erfindungsgemäßen Verfahrens nicht auf den vollständigen Umfang sämtlicher weiter oben oder weiter unten genannter Verfahrensschritte beschränkt. Insbesondere ist es vorgesehen, dass bei weiteren Ausführungsformen einzelne oder mehrere der vorstehenden oder nachstehenden Verfahrensschritte ausgelassen werden.

Die Erfindung betrifft auch ein Computerprogrammprodukt mit einem Programmcode, der in eine Prozessoreinheit eines Systems zur Erzeugung eines farbigen Bilds, das ein in einer Umgebung angeordnetes Objekt aufweist, ladbar ist oder geladen ist, wobei der Programmcode bei Ausführung in der Prozessoreinheit das System derart steuert, dass ein Verfahren mit mindestens einem der vorstehenden oder nachstehenden Merkmale oder mit einer Kombination von mindestens zwei der vorstehenden oder nachstehenden Merkmale durchgeführt wird. Mit anderen Worten ausgedrückt, betrifft die Erfindung auch ein nicht flüchtiges und von einem Computer lesbares Medium, das Software aufweist, die in eine Prozessoreinheit eines Systems zur Erzeugung eines farbigen Bilds, das ein in einer Umgebung angeordnetes Objekt aufweist, ladbar ist oder geladen ist, wobei die Software bei Ausführung in der Prozessoreinheit das System derart steuert, dass ein Verfahren mit mindestens einem der vorstehenden oder nachstehenden Merkmale oder mit einer Kombination von mindestens zwei der vorstehenden oder nachstehenden Merkmale durchgeführt wird. Die Software umfasst einen ausführbaren Code zur Durchführung mindestens eines Verfahrensschrittes.

Insofern betrifft die Erfindung auch eine Prozessoreinheit, die einem System zur Erzeugung eines farbigen Bilds, das ein in einer Umgebung angeordnetes Objekt aufweist, zugeordnet und dazu ausgelegt ist, ein Verfahren mit mindestens einem der vorstehenden oder nachstehenden Merkmale oder mit einer Kombination von mindestens zwei der vorstehenden oder nachstehenden Merkmale auszuführen.

Die Erfindung betrifft auch ein System zur Erzeugung eines farbigen Bilds, das ein in einer Umgebung angeordnetes Objekt aufweist. Das erfindungsgemäße System ist mit einer Kamera zur Aufnahme von Bildern versehen. Ferner weist das erfindungsgemäße System eine Prozessoreinheit auf, in die ein Computerprogrammprodukt mit mindestens einem der vorstehenden oder nachstehenden Merkmale oder mit einer Kombination von mindestens zwei der vorstehenden oder nachstehenden Merkmale geladen ist.

Bei einer Ausführungsform des erfindungsgemäßen Systems ist es zusätzlich oder alternativ vorgesehen, dass das System mindestens eine Speichereinheit und/oder mindestens eine Anzeigeeinheit aufweist. Die Speichereinheit ist insbesondere zur Speicherung des aufgenommenen ersten Bilds und/oder zur Speicherung der Farbinformationen über das abzubildende Objekt ausgelegt. Beispielsweise ist die Anzeigeeinheit ein Bildschirm einer mobilen Kommunikationseinheit, insbesondere eines tragbaren Telefons und/oder eines Tablet-Computers.

Bei einer weiteren Ausführungsform des erfindungsgemäßen Systems ist es zusätzlich oder alternativ vorgesehen, dass die Kamera und/oder die Prozessoreinheit und/oder die Speichereinheit und/oder die Anzeigeeinheit örtlich voneinander getrennt sind. Insbesondere kann die Entfernung zwischen den vorgenannten Einheiten mehr als 5 km, mehr als 10 km oder mehr als 50 km betragen. Eine Datenverbindung zwischen den vorgenannten Einheiten und/oder der Kamera wird beispielsweise durch eine drahtlose Verbindung, insbesondere eine Funkverbindung oder eine Mobilfunkverbindung, bereitgestellt.

Die Kamera des erfindungsgemäßen Systems weist beispielsweise ein Objektiv, einen beweglich angeordneten Infrarotsperrfilter und/oder eine optische Sensoreinheit auf. Insbesondere ist die optische Sensoreinheit als ein Halbleiterelement ausgebildet, beispielsweise als ein CMOS. Darüber hinaus weist die Kamera beispielsweise mindestens einen Bewegungssensor zur Detektion einer Bewegung auf. Bei der Detektion einer Bewegung ist es insbesondere vorgesehen, ein Bild mit der Kamera aufzunehmen. Die vorgenannte Kamera ist insbesondere als Wildkamera ausgebildet und wird beispielsweise zur Aufnahme von wild lebenden Tieren und/oder in der biologischen Forschung zur Beobachtung von wild lebenden Tieren verwendet. Wenn der Bewegungssensor die Anwesenheit eines Tiers erkennt, so wird mit der Wildkamera ein Bild des Tiers aufgenommen. Genauer gesagt, wird mit dem Objektiv auf die optische Sensoreinheit ein Bild des Tiers abgebildet. Das Bild kann beispielsweise auf der Speichereinheit gespeichert werden und/oder über eine drahtlose Verbindung an eine Empfangseinrichtung weitergeleitet werden.

Bei einer Ausführungsform des erfindungsgemäßen Systems ist es zusätzlich oder alternativ vorgesehen, dass die Kamera mehrere Kameraeinheiten aufweist. Beispielsweise weist die Kamera eine erste Kameraeinheit zur Aufnahme des ersten Bilds und eine zweite Kameraeinheit zur Aufnahme des zweiten Bilds auf. Die Erfindung ist aber nicht auf zwei Kameraeinheiten eingeschränkt. Vielmehr kann jede Anzahl an Kameraeinheiten verwendet werden, welche für die Erfindung geeignet ist. Jede Kameraeinheit weist jeweils ein Objektiv auf. Beispielsweise sind die Kameraeinheiten derart zueinander angeordnet, dass die Achsen der Objektive der Kameraeinheiten parallel zueinander ausgerichtet sind.

Nachfolgend wird die Verwendung des erfindungsgemäßen Systems kurz erläutert. Es wird zunächst zu einem ersten Zeitpunkt ein erstes Bild mit ersten Pixeln unter Verwendung der Kamera aufgenommen, wobei das erste Bild ausschließlich eine Umgebung zeigt. Ein interessierendes Objekt wird bei der Aufnahme des ersten Bilds nicht mit aufgenommen. Das erste Bild ist ein farbiges Bild. Beispielsweise wird das erste Bild in der Speichereinheit des Systems gespeichert. Ferner wird zu einem zweiten Zeitpunkt, der unterschiedlich zum ersten Zeitpunkt ist, ein zweites Bild mit zweiten Pixeln unter Verwendung der Kamera aufgenommen, wobei das zweite Bild sowohl die Umgebung als auch ein Objekt aufweist, an welchem man interessiert ist. Beispielsweise ist das Objekt ein Tier. Das zweite Bild ist kein farbiges Bild, sondern ein Bild mit Grauabstufungen (im Extremfall schwarz oder weiß). Ferner werden einige der Pixel des ersten Bilds mit der Prozessoreinheit bestimmt. Hierzu wird das erste Bild beispielsweise von der Speichereinheit in die Prozessoreinheit geladen. Die bestimmten Pixel des ersten Bilds weisen jeweils eine Farbinformation auf. Diese bestimmten Pixel werden als erste Eingabegröße in die Prozessoreinheit eingegeben. Darüber hinaus werden diejenigen Pixel des zweiten Bilds, welche ausschließlich die Umgebung und nicht das Objekt darstellen, als zweite Eingabegröße in die Prozessoreinheit eingegeben. Die Prozessoreinheit wird nun dazu verwendet, auf Basis der ersten Eingabegröße (also auf Basis der bestimmten Pixel des ersten Bilds mit der Farbinformation) eine Farbinformation für mindestens eines der Pixel des zweiten Bilds, vorzugsweise für mehrere der Pixel des zweiten Bilds oder vorzugsweise für jedes Pixel des zweiten Bilds zu berechnen, wobei die vorgenannten Pixel des zweiten Bilds ausschließlich die Umgebung betreffen (und nicht das Objekt). Im Anschluss daran wird mittels der Prozessoreinheit ein farbiges Bild, das zum einen die Umgebung und zum anderen das in der Umgebung angeordnete Objekt aufweist, auf Basis des zweiten Bilds und auf Basis der berechneten Farbinformation für das mindestens eine Pixel des zweiten Bilds, für die mehreren Pixel des zweiten Bilds oder für jedes Pixel des zweiten Bilds erzeugt, wobei die vorgenannten Pixel des zweiten Bilds ausschließlich die Umgebung betreffen (und nicht das Objekt). Somit wird die Umgebung im zweiten Bild farbig dargestellt.

Beispielsweise erfolgt bei dem erfindungsgemäßen System ein Aufnehmen des ersten Bilds mit der ersten Kameraeinheit. Wie weiter oben bereits ausgeführt, weist das erste Bild die erste Menge an ersten Pixeln auf, die farbig ausgestaltet sind. Beispielsweise wird das erste Bild bei einer ausreichend natürlichen Helligkeit aufgenommen, insbesondere bei Tageslicht. Die Aufnahme des ersten Bilds erfolgt demnach beispielsweise ohne die Verwendung eines Lichtblitzes. Das aufgenommene erste Bild ist ein Farbbild. Mit anderen Worten ausgedrückt, ist das aufgenommene erste Bild farbig ausgestaltet. Das Aufnehmen des zweiten Bilds erfolgt bei dem erfindungsgemäßen System beispielsweise mit der zweiten Kameraeinheit, wobei das zweite Bild zum einen die Umgebung und zum anderen ein in der Umgebung angeordnetes Objekt aufweist. Beispielsweise ist das Objekt ein Tier oder umfasst mehrere Tiere. Wie oben bereits weiter ausgeführt, weist das zweite Bild die zweite Menge an zweiten Pixeln auf, die nicht farbig ausgestaltet sind. Mit anderen Worten ausgedrückt, ist das aufgenommene zweite Bild kein Farbbild, sondern ein Bild, das zum einen die Umgebung und zum anderen das in der Umgebung angeordnete Objekt in Grauabstufungen (im Extremfall schwarz oder weiß) darstellt. Beispielsweise wird das zweite Bild unter Nutzung der an der Kamera angeordneten Nahinfrarotlichtquelle aufgenommen, welche das von ihr erzeugte Nahinfrarotlicht auf das Objekt und die sich im Sichtfeld der zweiten Kameraeinheit befindende Umgebung strahlt. Das Nahinfrarotlicht ist beispielsweise für ein Tier in der Regel nicht störend. Das zweite Bild wird insbesondere zu einem Zeitpunkt aufgenommen, zu dem die natürliche Helligkeit nicht derart ausreichend für eine Aufnahme des zweiten Bilds ist, um Konturen sowie Details der Umgebung und/oder des Objekts im zweiten Bild zu erkennen (beispielsweise bei Dämmerung oder in der Nacht). Wie oben erläutert, ist das zweite Bild jedoch kein Farbbild, sondern ein Bild, welches das im zweiten Bild dargestellte Objekt und dessen Umgebung in Grauabstufungen (im Extremfall schwarz oder weiß) darstellt.

Bei einer weiteren Ausführungsform des erfindungsgemäßen Systems ist es zusätzlich oder alternativ vorgesehen, dass die erste Menge der ersten Pixel des ersten Bilds beispielsweise unter Verwendung der Prozessoreinheit auf die zweite Menge der zweiten Pixel des zweiten Bilds skaliert wird. Zusätzlich oder alternativ hierzu ist es vorgesehen, dass die zweite Menge der zweiten Pixel des zweiten Bilds beispielsweise unter Verwendung der Prozessoreinheit auf die erste Menge der ersten Pixel des ersten Bilds skaliert wird.

Weitere praktische Ausführungsformen und Vorteile der Erfindung sind nachfolgend im Zusammenhang mit den Zeichnungen beschrieben. Es zeigen:
- Figur 1: eine schematische Darstellung eines erfindungsgemäßen Systems;
- Figur 2: ein Ablaufdiagramm einer ersten Ausführungsform eines Verfahrens (nicht Teil der Erfindung, aber wichtig zum Verständnis der Erfindung);
- Figur 3: eine schematische Darstellung eines ersten Bilds;
- Figur 4: eine schematische Darstellung eines zweiten Bilds;
- Figur 5: eine schematische Darstellung einer Prozessoreinheit des erfindungsgemäßen Systems;
- Figur 6: eine schematische Darstellung eines erzeugten farbigen Bilds;
- Figur 7: ein Ablaufdiagramm einer zweiten Ausführungsform des Verfahrens;
- Figur 8: eine schematische Darstellung eines weiteren erzeugten farbigen Bilds;
- Figur 9: ein Ablaufdiagramm einer dritten Ausführungsform des Verfahrens;
- Figur 10: ein Ablaufdiagramm einer vierten Ausführungsform des Verfahrens;
- Figur 11: ein Ablaufdiagramm einer Ausführungsform des erfindungsgemäßen Verfahrens; sowie
- Figur 12: eine schematische Darstellung eines weiteren erfindungsgemäßen Systems.

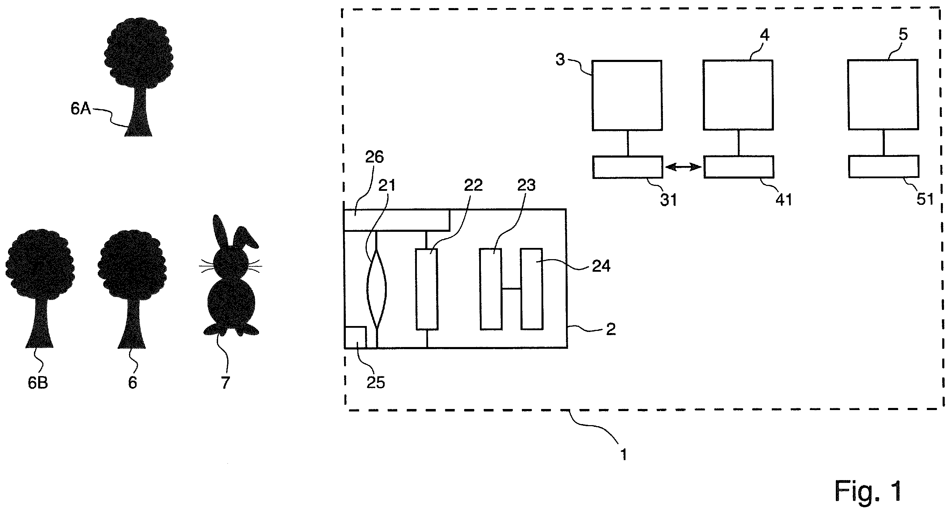

**Figur 1** zeigt eine Ausführungsform eines erfindungsgemäßen Systems 1 zur Erzeugung eines farbigen Bilds, das ein in einer Umgebung 6, 6A sowie 6B angeordnetes Objekt 7 aufweist. Das erfindungsgemäße System 1 ist mit einer Kamera 2 zur Aufnahme von Bildern versehen. Ferner weist das erfindungsgemäße System 1 eine Prozessoreinheit 3, eine Speichereinheit 4 und eine Anzeigeeinheit 5 auf. Bei der in **Figur 1** dargestellten Ausführungsform des erfindungsgemäßen Systems 1 sind die Kamera 2, die Prozessoreinheit 3, die Speichereinheit 4 und die Anzeigeeinheit 5 örtlich voneinander getrennt. Insbesondere kann die Entfernung zwischen der Kamera 2, der Prozessoreinheit 3, der Speichereinheit 4 und/oder der Anzeigeeinheit 5 mehr als 5 km, mehr als 10 km oder mehr als 50 km betragen. Eine Datenverbindung zwischen der Kamera 2, der Prozessoreinheit 3, der Speichereinheit 4 und/oder der Anzeigeeinheit 5 wird beispielsweise durch eine drahtlose Verbindung, insbesondere eine Funkverbindung oder eine Mobilfunkverbindung, bereitgestellt. Hierauf wird weiter unten näher eingegangen. Alternativ hierzu ist es bei einer Ausführungsform des erfindungsgemäßen Systems 1 vorgesehen, dass die Kamera 2, die Prozessoreinheit 3, die Speichereinheit 4 und/oder die Anzeigeeinheit 5 nicht örtlich voneinander getrennt und beispielsweise in einer identischen Einrichtung angeordnet sind, insbesondere in einem Kameragehäuse der Kamera 2.

Nachfolgend wird auf die Kamera 2 des erfindungsgemäßen Systems 1 eingegangen. Die Kamera 2 weist ein Objektiv 21, einen beweglich ausgebildeten Infrarotsperrfilter 22 und eine optische Sensoreinheit 23 auf. Insbesondere ist die optische Sensoreinheit 23 als ein Halbleiterelement ausgebildet, beispielsweise als ein CMOS. Ferner weist die Kamera 2 ein Kommunikationsmodul 24 auf. Das Kommunikationsmodul 24 kommuniziert beispielsweise über eine drahtlose Verbindung, insbesondere eine Funkverbindung oder eine Mobilfunkverbindung, mit einem Kommunikationsmodul 31 der Prozessoreinheit 3, mit einem Kommunikationsmodul 41 der Speichereinheit 4 und/oder mit einem Kommunikationsmodul 51 der Anzeigeeinheit 5. Auf diese Weise ist es möglich, Daten zwischen mindestens zwei der nachfolgenden Einheiten auszutauschen: der Kamera 2, der Prozessoreinheit 3, der Speichereinheit 4 und der Anzeigeeinheit 5. Darüber hinaus weist die Kamera 2 einen Bewegungssensor 25 zur Detektion einer Bewegung sowie eine Nahinfrarotlichtquelle 26 auf.

Die Kamera 2 ist insbesondere als Wildkamera ausgebildet und wird beispielsweise zur Aufnahme des Objekts 7 in Form eines wild lebenden Tiers und/oder in der biologischen Forschung zur Beobachtung eines wild lebenden Tiers verwendet. Wenn der Bewegungssensor 25 die Anwesenheit des Objekts 7 beispielsweise in Form des Tiers erkennt, so wird mit der Kamera 2 ein Bild des Objekts 7 aufgenommen. Genauer gesagt, wird mit dem Objektiv 21 ein Bild des Objekts 7 auf die optische Sensoreinheit 23 abgebildet. Das Bild kann beispielsweise in der Speichereinheit 4 gespeichert werden.

In der Prozessoreinheit 3 des erfindungsgemäßen Systems 1 ist ein Computerprogrammprodukt geladen. Das Computerprogrammprodukt weist einen Programmcode auf, der bei Ausführung in der Prozessoreinheit 3 das erfindungsgemäße System 1 derart steuert, dass ein erfindungsgemäßes Verfahren ausgeführt wird.

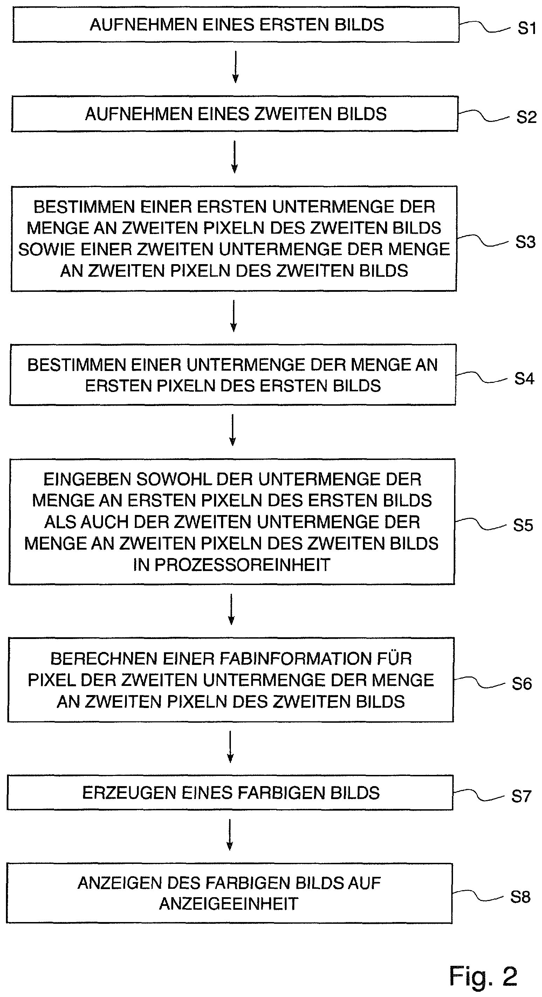

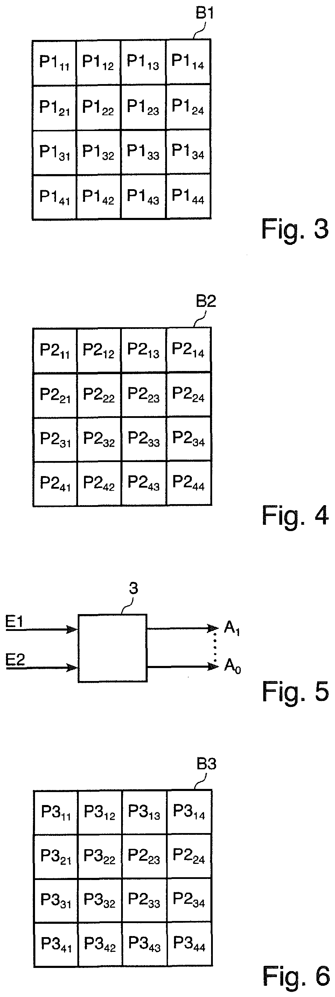

**Figur 2** zeigt ein Ablaufdiagramm einer ersten Ausführungsform des Verfahrens. In einem Verfahrensschritt S1 erfolgt ein Aufnehmen eines ersten Bilds mit der Kamera 2. Das erste Bild ist schematisch in der **Figur 3** dargestellt und mit dem Bezugszeichen B1 gekennzeichnet. Das erste Bild B1 weist eine erste Menge an ersten Pixeln P1ᵢⱼ auf, wobei i und j ganze Zahlen sind, für die gilt: 1 ≤ i ≤ n und 1 ≤ j ≤ m, wobei n die Anzahl der Zeilen und m die Anzahl der Spalten des ersten Bilds B1 sind. In der **Figur 3** ist das erste Bild B1 beispielhaft mit nur vier Zeilen und nur vier Spalten dargestellt, um die Erfindung einfacher zu erläutern. Es wird darauf hingewiesen, dass die Erfindung nicht auf ein erstes Bild B1 mit nur vier Zeilen und nur vier Spalten eingeschränkt ist. Vielmehr kann das erste Bild B1 jegliche Anzahl an Pixeln, jegliche Anzahl an Zeilen und/oder jegliche Anzahl an Spalten aufweisen, welche für die Erfindung geeignet sind/ist.

Die erste Menge an ersten Pixeln P1ᵢⱼ ist farbig ausgestaltet. Mit anderen Worten ausgedrückt, ist das erste Bild B1 ein Farbbild, das sich aus den ersten Pixeln P1ᵢⱼ zusammensetzt. Ferner ist es vorgesehen, dass das erste Bild B1 ausschließlich die Umgebung 6, 6A und 6B zeigt. Mit anderen Worten ausgedrückt, wird das erste Bild B1 zu einem ersten Zeitpunkt aufgenommen, zu welchem das Objekt 7 sich nicht im Sichtfeld der Kamera 2 befindet. Insofern zeigt das erste Bild B1 nicht das Objekt 7, sondern nur die Umgebung 6, 6A und 6B im Sichtfeld der Kamera 2. Beispielsweise ist auf dem ersten Bild B1 kein Tier abgebildet, sondern nur die natürliche Umgebung 6, 6A und 6B des Tiers, beispielsweise ein Waldstück, welches sich im Sichtfeld des Objektivs 21 der Kamera 2 befindet.

Beispielsweise wird das erste Bild B1 zu einem ersten Zeitpunkt bei einer ausreichend natürlichen Helligkeit aufgenommen, insbesondere bei Tageslicht. Die Aufnahme des ersten Bilds B1 erfolgt beispielsweise ohne die Verwendung eines Lichtblitzes. Insbesondere ist es vorgesehen, das erste Bild B1 mit dem im Strahlengang der Kamera 2 angeordneten Infrarotsperrfilter 22 aufzunehmen.

Beispielsweise erfolgt das Aufnehmen des ersten Bilds B1 mit der Kamera 2 derart, dass jedes Pixel der ersten Menge an ersten Pixeln P1ᵢⱼ eine Farbinformation sowie eine Ortsinformation hinsichtlich seiner Lage im ersten Bild B1 aufweist.

In einem Verfahrensschritt S2 erfolgt ein Aufnehmen eines zweiten Bilds mit der Kamera 2, wobei das zweite Bild zum einen die Umgebung 6, 6A und 6B und zum anderen ein in der Umgebung 6, 6A und 6B angeordnetes Objekt 7 aufweist. Beispielsweise ist das Objekt 7 ein Tier oder umfasst mehrere Tiere. Das zweite Bild ist schematisch in der **Figur 4** dargestellt und mit dem Bezugszeichen B2 gekennzeichnet. Das zweite Bild B2 weist eine zweite Menge an zweiten Pixeln P2ᵢⱼ auf, wobei i und j ganze Zahlen sind, für die gilt: 1 ≤ i ≤ n und 1 ≤ j ≤ m, wobei n die Anzahl der Zeilen und m die Anzahl der Spalten des zweiten Bilds B2 sind. In der **Figur 4** ist das zweite Bild B2 beispielhaft mit nur vier Zeilen und nur vier Spalten dargestellt, um die Erfindung einfacher zu erläutern. Es wird darauf hingewiesen, dass die Erfindung nicht auf ein zweites Bild B2 mit nur vier Zeilen und nur vier Spalten eingeschränkt ist. Vielmehr kann das zweite Bild B2 jegliche Anzahl an Pixeln, jegliche Anzahl an Zeilen und/oder jegliche Anzahl an Spalten aufweisen, die für die Erfindung geeignet sind/ist.

Das zweite Bild B2 weist eine zweite Menge an zweiten Pixeln P2ᵢⱼ auf, die nicht farbig ausgestaltet sind. Mit anderen Worten ausgedrückt, ist das im Verfahrensschritt S2 aufgenommene zweite Bild B2 kein Farbbild, sondern ein Bild, das zum einen die Umgebung 6, 6A und 6B und zum anderen das in der Umgebung 6, 6A und 6B angeordnete Objekt 7 in Grauabstufungen (im Extremfall schwarz oder weiß) darstellt.

Beispielsweise wird das zweite Bild B2 ohne den Infrarotsperrfilter 22 und unter Nutzung der an der Kamera 2 angeordneten Nahinfrarotlichtquelle 26 aufgenommen, welche das von ihr erzeugte Nahinfrarotlicht auf das Objekt 7 und die sich im Sichtfeld der Kamera 2 befindende Umgebung 6, 6A und 6B strahlt. Das Nahinfrarotlicht ist beispielsweise für ein Tier in der Regel nicht störend.

Das zweite Bild B2 wird insbesondere zu einem zweiten Zeitpunkt aufgenommen der unterschiedlich zum ersten Zeitpunkt ist. Beispielsweise ist der erste Zeitpunkt zu einer Tageszeit, zu welcher das erste Bild B1 bei einer ausreichend natürlichen Helligkeit aufgenommen werden kann, so dass ausreichend Konturen und Details im ersten Bild B1 zu erkennen sind. Beispielsweise ist der erste Zeitpunkt zu einer Tageszeit, zu welcher es hell ist und in der Regel die Sonne scheint. Ferner ist beispielsweise der zweite Zeitpunkt zu einer Tageszeit, zu welcher es nicht hell ist, insbesondere in der Nacht. Der zweite Zeitpunkt ist beispielsweise ein Zeitpunkt, zu dem die natürliche Helligkeit nicht derart ausreichend für eine Aufnahme des zweiten Bilds B2 ist, um Konturen sowie Details der Umgebung 6, 6A und 6B und/oder des Objekts 7 im zweiten Bild B2 zu erkennen (beispielsweise bei Dämmerung oder in der Nacht). Der erste Zeitpunkt und der zweite Zeitpunkt können beispielsweise in der Größenordnung von Stunden oder Tagen auseinanderliegen.

Beispielsweise erfolgt das Aufnehmen des zweiten Bilds B2 mit der Kamera 2 derart, dass jedes Pixel der zweiten Menge an zweiten Pixeln P2ᵢⱼ eine Information über eine Grauabstufung sowie eine Ortsinformation hinsichtlich seiner Lage im zweiten Bild B2 aufweist.

In einem weiteren Verfahrensschritt S3 des Verfahrens gemäß der **Figur 2** erfolgt ein Bestimmen einer ersten Untermenge der Menge an zweiten Pixeln P2ᵢⱼ des zweiten Bilds B2 unter Verwendung der Prozessoreinheit 3. Die erste Untermenge der Menge an zweiten Pixeln P2ᵢⱼ stellt das Objekt 7 dar. Mit anderen Worten ausgedrückt, werden bei dem Verfahrensschritt S3 diejenigen Pixel aus der Menge der zweiten Pixel P2ᵢⱼ identifiziert, welche im zweiten Bild B2 ausschließlich das Objekt 7 beinhalten (und nicht die Umgebung 6, 6A und 6B). Diese Pixel bilden dann die erste Untermenge der Menge an zweiten Pixeln P2ᵢⱼ. Beispielsweise wird die erste Untermenge der Menge an zweiten Pixeln P2ᵢⱼ von den Pixeln P2₂₃ P2₂₄, P2₃₃ sowie P2₃₄ gebildet.

Ferner erfolgt im Verfahrensschritt S3 ein Bestimmen einer zweiten Untermenge der Menge an zweiten Pixeln P2ᵢⱼ des zweiten Bilds B2 unter Verwendung der Prozessoreinheit 3. Die zweite Untermenge der Menge an zweiten Pixeln P2ᵢⱼ stellt die Umgebung 6, 6A und 6B dar (und nicht das Objekt 7). Mit anderen Worten ausgedrückt, werden bei dem Verfahrensschritt S3 diejenigen Pixel aus der Menge der zweiten Pixel P2ᵢⱼ identifiziert, welche im zweiten Bild B2 ausschließlich die Umgebung 6, 6A und 6B beinhalten (und nicht das Objekt 7). Beispielsweise wird die zweite Untermenge der Menge an zweiten Pixeln P2ᵢⱼ von den Pixeln P2₁₁, P2₁₂, P2₁₃, P2₁₄, P2₂₁, P2₂₂, P2₃₁, P2₃₂, P2₄₁, P2₄₂, P2₄₃, sowie P2₄₄ gebildet.

In einem weiteren Verfahrensschritt S4 des Verfahrens gemäß der **Figur 2** erfolgt ein Bestimmen einer Untermenge der Menge an ersten Pixeln P1ᵢⱼ des ersten Bilds B1 unter Verwendung der Prozessoreinheit 3. Mit anderen Worten ausgedrückt, werden einige Pixel aus der Menge der ersten Pixel P1ᵢⱼ des ersten Bilds B1 bestimmt und bilden die vorgenannte Untermenge. Demnach umfasst die vorgenannte Untermenge eine geringere Anzahl an Pixeln als die Menge der ersten Pixel P1ᵢⱼ des ersten Bilds B1. Die vorgenannte Untermenge umfasst nur Pixel des ersten Bilds B1, die korrespondierenden Pixeln der Menge an zweiten Pixeln P2ᵢⱼ des zweiten Bilds B2 entsprechen, wobei die korrespondierenden Pixel der Menge an zweiten Pixeln P2ᵢⱼ des zweiten Bilds B2 ausschließlich die Umgebung 6, 6A und 6B aufweisen. Mit anderen Worten ausgedrückt, umfasst die bestimmte Untermenge der Menge an ersten Pixeln P1ᵢⱼ des ersten Bilds B1 nur Pixel, welche die Umgebung 6, 6A und 6B zeigen, wobei diese Umgebung 6, 6A und 6B auch durch korrespondierende Pixel der Menge an zweiten Pixeln P2ᵢⱼ des zweiten Bilds B2 dargestellt wird. Die bestimmte Untermenge der Menge an ersten Pixeln P1ᵢⱼ des ersten Bilds B1 umfasst keine Pixel, an deren Position im zweiten Bild B2 das Objekt 7 dargestellt ist. Die Art des Bestimmens der Untermenge der Menge an ersten Pixeln P1ᵢⱼ des ersten Bilds B1 ist beliebig, sodass jede für die Erfindung geeignete Art des Bestimmens verwendet werden kann. Insbesondere ist es vorgesehen, dass die Pixel der vorgenannten Untermenge unter Verwendung eines Zufallsgenerators bestimmt werden. Zusätzlich oder alternativ hierzu ist es vorgesehen, dass die Pixel der vorgenannten Untermenge gleichmäßig oder ungleichmäßig im ersten Bild B1 verteilt sind. Beispielsweise bilden die Pixel P1₁₂, P1₁₄, P1₄₁ sowie P1₄₃, die bestimmte Untermenge an ersten Pixeln P1ᵢⱼ des ersten Bilds B1. Es wird darauf hingewiesen, dass die Anzahl der Pixel der bestimmten Untermenge an ersten Pixeln P1ᵢⱼ des ersten Bilds B1 beliebig ist, wobei die Anzahl kleiner als die Gesamtheit der Pixel P1ᵢⱼ der Menge an ersten Pixeln P1ᵢⱼ des ersten Bilds B1 ist.

In einem weiteren Verfahrensschritt S5 des Verfahrens gemäß der **Figur 2** erfolgt ein Eingeben sowohl der Untermenge der Menge an ersten Pixeln P1ᵢⱼ des ersten Bilds B1 als eine erste Eingangsgröße E1 (bei der hier dargestellten Ausführungsform also die Pixel P1₁₂, P1₁₄, P1₄₁ sowie P1₄₃) als auch der zweiten Untermenge der Menge an zweiten Pixeln P2ᵢⱼ des zweiten Bilds B2 als zweite Eingangsgröße E2 (bei der hier dargestellten Ausführungsform also die Pixel P2₁₁, P2₁₂, P2₁₃, P2₁₄, P2₂₁, P2₂₂, P2₃₁, P2₃₂, P2₄₁, P2₄₂, P2₄₃ sowie P2₄₄) in die Prozessoreinheit 3. **Figur 5** zeigt eine schematische Darstellung der Prozessoreinheit 3, in welche die erste Eingangsgröße E1 und die zweite Eingangsgröße E2 eingegeben wird.

In einem weiteren Verfahrensschritt S6 des Verfahrens gemäß der **Figur 2** erfolgt unter Verwendung der Prozessoreinheit 3 ein Berechnen einer Farbinformation für mindestens ein Pixel der zweiten Untermenge der Menge an zweiten Pixeln P2ᵢⱼ des zweiten Bilds B2 (bei der hier dargestellten Ausführungsform also die Pixel P2₁₁, P2₁₂, P2₁₃, P2₁₄, P2₂₁, P2₂₂, P2₃₁, P2₃₂, P2₄₁, P2₄₂, P2₄₃ sowie P2₄₄) auf Basis mindestens eines Pixels der Untermenge der Menge an ersten Pixeln P1ᵢⱼ des ersten Bilds B1 (bei der hier dargestellten Ausführungsform also die Pixel P1₁₂, P1₁₄, P1₄₁ sowie P1₄₃). Mit anderen Worten ausgedrückt, werden sowohl die Untermenge der Menge an ersten Pixeln P1ᵢⱼ des ersten Bilds B1 (bei der hier dargestellten Ausführungsform also die Pixel P1₁₂, P1₁₄, P1₄₁ sowie P1₄₃) als auch die zweite Untermenge der Menge an zweiten Pixeln P2ᵢⱼ des zweiten Bilds B2 (bei der hier dargestellten Ausführungsform also die Pixel P2₁₁, P2₁₂, P2₁₃, P2₁₄, P2₂₁, P2₂₂, P2₃₁, P2₃₂, P2₄₁, P2₄₂, P2₄₃ sowie P2₄₄) als Eingangsgrößen in die Prozessoreinheit 3 eingegeben. Die Prozessoreinheit 3 berechnet nun mindestens eine Ausgangsgröße Aₚ, nämlich eine Farbinformation für mindestens ein Pixel der zweiten Untermenge der Menge an zweiten Pixeln P2ᵢⱼ des zweiten Bilds B2 (bei der hier dargestellten Ausführungsform also die Pixel P2₁₁, P2₁₂, P2₁₃, P2₁₄, P2₂₁, P2₂₂, P2₃₁, P2₃₂, P2₄₁, P2₄₂, P2₄₃ sowie P2₄₄) auf Basis mindestens eines Pixels der Untermenge der Menge an ersten Pixeln P1ᵢⱼ des ersten Bilds B1 (bei der hier dargestellten Ausführungsform also die Pixel P1₁₂, P1₁₄, P1₄₁ sowie P1₄₃). Beispielsweise berechnet die Prozessoreinheit 3 für jedes Pixel der zweiten Untermenge der Menge an zweiten Pixeln P2ᵢⱼ des zweiten Bilds B2 (bei der hier dargestellten Ausführungsform also die Pixel P2₁₁, P2₁₂, P2₁₃, P2₁₄, P2₂₁, P2₂₂, P2₃₁, P2₃₂, P2₄₁, P2₄₂, P2₄₃ sowie P2₄₄) auf Basis mindestens eines Pixels der Untermenge der Menge an ersten Pixeln P1ᵢⱼ des ersten Bilds B1 (bei der hier dargestellten Ausführungsform also die Pixel P1₁₂, P1₁₄, P1₄₁ sowie P1₄₃) jeweils eine Ausgangsgröße in Form einer Farbinformation Aₚ, wobei gilt: 1 ≤ p ≤ o, wobei o die Anzahl der Pixel der zweiten Untermenge der Menge an zweiten Pixeln P2ᵢⱼ des zweiten Bilds B2 ist. Insbesondere ist es vorgesehen, dass die Prozessoreinheit 3 für jedes Pixel der zweiten Untermenge der Menge an zweiten Pixeln P2ᵢⱼ des zweiten Bilds B2 (bei der hier dargestellten Ausführungsform also die Pixel P2₁₁, P2₁₂, P2₁₃, P2₁₄, P2₂₁, P2₂₂, P2₃₁, P2₃₂, P2₄₁, P2₄₂, P2₄₃ sowie P2₄₄) auf Basis von allen Pixeln der Untermenge der Menge an ersten Pixeln P1ᵢⱼ des ersten Bilds B1 (bei der hier dargestellten Ausführungsform also die Pixel P1₁₂, P1₁₄, P1₄₁ sowie P1₄₃) jeweils eine Ausgangsgröße in Form einer Farbinformation Aₚ berechnet, wobei gilt: 1 ≤ p ≤ o, wobei o die Anzahl der Pixel der zweiten Untermenge der Menge an zweiten Pixeln P2ᵢⱼ des zweiten Bilds B2 ist.

Somit erhält/erhalten das Pixel oder die Pixel der zweiten Untermenge der Menge an zweiten Pixeln des zweiten Bilds eine Farbinformation, obwohl dieses Pixel oder diese Pixel ursprünglich nur eine Information hinsichtlich einer Grauabstufung aufweist/aufweisen.

Das vorgenannte Berechnen erfolgt beispielsweise unter Verwendung (i) eines mathematischen Modells, (ii) von maschinellem Lernen und/oder (iii) eines künstlichen neuronalen Netzwerks. Mit anderen Worten ausgedrückt, berechnet beispielsweise eine künstliche Intelligenz auf Basis der ersten Eingangsgröße E1 und der zweiten Eingangsgröße E2 die Ausgangsgröße(n) Aₚ. Mit diesen Ausgangsgröße(n) ist es möglich, das farbige Bild zu erzeugen. Zusätzlich oder alternativ hierzu ist es vorgesehen, dass das vorgenannte Berechnen unter Verwendung (i) eines einzigen mathematischen Modells und/oder (ii) eines einzigen künstlichen neuronalen Netzwerks erfolgt. Mit anderen Worten ausgedrückt, verwendet die Prozessoreinheit 3 zur Berechnung der Farbinformation nur ein einziges mathematisches Modell und/oder nur ein einziges künstliches neuronales Netzwerk.

In einem weiteren Verfahrensschritt S7 des Verfahrens gemäß der **Figur 2** erfolgt ein Erzeugen des farbigen Bilds, das ein in der Umgebung 6, 6A, 6B angeordnetes Objekt 7 aufweist, unter Verwendung der Prozessoreinheit 3 auf Basis des zweiten Bilds B2 sowie auf Basis der Farbinformation des mindestens einen Pixels der zweiten Untermenge der Menge an zweiten Pixeln P2ᵢⱼ des zweiten Bilds B2 (bei der hier dargestellten Ausführungsform also die Pixel P2₁₁, P2₁₂, P2₁₃, P2₁₄, P2₂₁, P2₂₂, P2₃₁, P2₃₂, P2₄₁, P2₄₂, P2₄₃ sowie P2₄₄). Mit anderen Worten ausgedrückt, wird mittels der Prozessoreinheit 3 basierend zum einen auf dem zweiten Bild B2, das nicht farbig ausgestaltet ist, und zum anderen auf der berechneten Farbinformation des mindestens einen Pixels der zweiten Untermenge der Menge an zweiten Pixeln P2ᵢⱼ des zweiten Bilds B2 (bei der hier dargestellten Ausführungsform also die Pixel P2₁₁, P2₁₂, P2₁₃, P2₁₄, P2₂₁, P2₂₂, P2₃₁, P2₃₂, P2₄₁, P2₄₂, P2₄₃ sowie P2₄₄) das farbige Bild erzeugt, welches zum einen die Umgebung 6, 6A und 6B und zum anderen das in der Umgebung 6, 6A und 6B angeordnete Objekt 7 darstellt. Mittels des erfindungsgemäßen Verfahrens wird die Umgebung 6, 6A und 6B im erzeugten farbigen Bild farbig dargestellt.

**Figur 6** zeigt eine schematische Darstellung des erzeugten farbigen Bilds B3. Das farbige Bild B3 weist eine dritte Menge an dritten Pixeln P3ᵢⱼ auf, wobei i und j ganze Zahlen sind, für die gilt: 1 ≤ i ≤ n und 1 ≤ j ≤ m, wobei n die Anzahl der Zeilen und m die Anzahl der Spalten des dritten Bilds B3 sind. In der **Figur 6** ist das farbige Bild B3 beispielhaft mit nur vier Zeilen und nur vier Spalten dargestellt, um die Erfindung einfacher zu erläutern. Es wird darauf hingewiesen, dass die Erfindung nicht auf ein farbiges Bild B3 mit nur vier Zeilen und nur vier Spalten eingeschränkt ist. Vielmehr kann das farbige Bild B3 jegliche Anzahl an Pixeln, jegliche Anzahl an Zeilen und/oder jegliche Anzahl an Spalten aufweisen, die für die Erfindung geeignet sind/ist. Bei der hier dargestellten Ausführungsform des Verfahrens wurde keine Berechnung einer Farbinformation derjenigen Pixel vorgenommen, welche das Objekt 7 darstellen. Insofern entsprechen im farbigen Bild B3 das Pixel P3₂₃ dem Pixel P2₂₃, das Pixel P3₂₄ dem Pixel P2₂₄, das Pixel P3₃₃ dem Pixel P2₃₃ sowie das Pixel P3₃₄ dem Pixel P2₃₄. Demnach wird bei dieser Ausführungsform des Verfahrens ausschließlich die Umgebung 6, 6A und 6B farbig dargestellt. Hingegen wird das Objekt 7 in Graustufen dargestellt.

In einem weiteren Verfahrensschritt S8 des Verfahrens gemäß der **Figur 2** erfolgt ein Anzeigen (also ein Darstellen) des farbigen Bilds B3 auf der Anzeigeeinheit 5. Beispielsweise ist die Anzeigeeinheit 5 ein Bildschirm einer mobilen Kommunikationseinheit, insbesondere eines tragbaren Telefons und/oder eines Tablet-Computers.

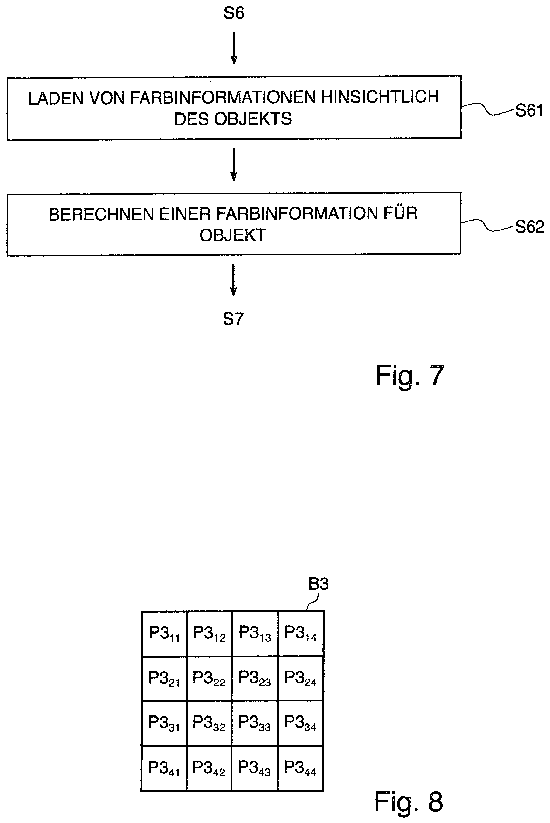

**Figur 7** zeigt eine zweite Ausführungsform des Verfahrens. Die Ausführungsform gemäß der **Figur 7** basiert auf der Ausführungsform gemäß der **Figur 2****.** Es wird daher auf die weiter oben gemachten Ausführungen verwiesen, die auch hier gelten. Im Unterschied zur Ausführungsform des Verfahrens gemäß der **Figur 2** weist die Ausführungsform des Verfahrens gemäß der **Figur 7** zwei weitere Verfahrensschritte auf, die beispielsweise zwischen dem Verfahrensschritt S6 und dem Verfahrensschritt S7 ausgeführt werden. Bei der in **Figur 7** dargestellten Ausführungsform des Verfahrens ist es vorgesehen, auch das Objekt 7 in dem farbigen Bild B3 farbig darzustellen. Hierzu erfolgt im Verfahrensschritt S61 ein Laden von Farbinformationen hinsichtlich des Objekts 7 für die erste Untermenge der Menge an zweiten Pixeln P2ᵢⱼ des zweiten Bilds B2 aus der Speichereinheit 4 in die Prozessoreinheit 3. Wie weiter oben bereits ausgeführt, stellt die erste Untermenge der Menge an zweiten Pixeln P2ᵢⱼ das Objekt 7 dar. Dies sind die Pixel aus der Menge der zweiten Pixel P2ᵢⱼ, welche im zweiten Bild B2 ausschließlich das Objekt 7 beinhalten (und nicht die Umgebung 6, 6A und 6B). Beispielsweise wird die erste Untermenge der Menge an zweiten Pixeln P2ᵢⱼ von den Pixeln P2₂₃, P2₂₄, P2₃₃ sowie P2₃₄ gebildet. Bei der in **Figur 7** dargestellten Ausführungsform des Verfahrens ist es nun im Verfahrensschritt S62 vorgesehen, dass ein Berechnen einer Farbinformation für mindestens ein Pixel der ersten Untermenge der Menge an zweiten Pixeln P2ᵢⱼ des zweiten Bilds B2 (bei der hier dargestellten Ausführungsform sind dies die Pixel P2₂₃, P2₂₄, P2₃₃ sowie P2₃₄) auf Basis der geladenen Farbinformationen unter Verwendung der Prozessoreinheit 3 erfolgt. Mit anderen Worten ausgedrückt, wird mindestens einem Pixel der vorgenannten ersten Untermenge eine Farbinformation zugeordnet, sodass das Objekt 7 farbig dargestellt werden kann. Vorzugsweise wird eine Farbinformation für mehrere der Pixel oder für jedes der Pixel der ersten Untermenge der Menge an zweiten Pixeln P2ᵢⱼ des zweiten Bilds B2 auf Basis der geladenen Farbinformationen unter Verwendung der Prozessoreinheit 3 berechnet. Beispielsweise erfolgt das Berechnen der Farbinformation derart, dass sowohl die Pixel der ersten Untermenge der Menge an zweiten Pixeln P2ᵢⱼ des zweiten Bilds B2 als auch die geladenen Farbinformationen als Eingangsgrößen in die Prozessoreinheit 3 eingegeben werden. Die Prozessoreinheit 3 berechnet nun Ausgangsgrößen, nämlich jeweils eine Farbinformation für mindestens (a) ein Pixel oder (b) für mehrere Pixel oder (c) für jedes Pixel der ersten Untermenge der Menge an zweiten Pixeln P2ᵢⱼ des zweiten Bilds B2 auf Basis der geladenen Farbinformationen. Somit erhält ein Pixel der ersten Untermenge der Menge an zweiten Pixeln P2ᵢⱼ des zweiten Bilds B2 eine Farbinformation, obwohl dieses Pixel ursprünglich nur eine Information hinsichtlich einer Grauabstufung aufweist. Beispielsweise ist es zusätzlich oder alternativ vorgesehen, dass das vorgenannte Berechnen unter Verwendung (i) eines mathematischen Modells, (ii) von maschinellem Lernen und/oder (iii) eines künstlichen neuronalen Netzwerks erfolgt. Mit anderen Worten ausgedrückt, berechnet beispielsweise eine künstliche Intelligenz auf Basis der vordefinierten und weiter oben oder weiter unten erläuterten Eingangsgrößen eine ganz bestimmte weiter oben oder weiter unten erläuterte Ausgangsgröße oder mehrere ganz bestimmte weiter oben oder weiter unten erläuterte Ausgangsgrößen. Mit dieser/diesen Ausgangsgröße(n) ist es möglich, das farbige Bild zu erzeugen. Zusätzlich oder alternativ hierzu ist es vorgesehen, dass das vorgenannte Berechnen unter Verwendung (i) eines einzigen mathematischen Modells und/oder (ii) eines einzigen künstlichen neuronalen Netzwerks erfolgt. Mit anderen Worten ausgedrückt, verwendet die Prozessoreinheit 3 zur Berechnung der Farbinformation nur ein einziges mathematisches Modell und/oder nur ein einziges künstliches neuronales Netzwerk. Insbesondere ist es bei dieser Ausführungsform des erfindungsgemäßen Verfahrens vorgesehen, dass das Erzeugen des farbigen Bilds B3, das zum einen die Umgebung 6, 6A und 6B und zum anderen das in der Umgebung 6, 6A und 6B angeordnete Objekt 7 aufweist, unter Verwendung der berechneten Farbinformation für das mindestens eine Pixel der ersten Untermenge der Menge an zweiten Pixeln P2ᵢⱼ des zweiten Bilds B2 erfolgt. Vorzugsweise erfolgt das Erzeugen des farbigen Bilds B3 unter Verwendung der berechneten Farbinformationen für die mehreren Pixel oder für jedes der Pixel der ersten Untermenge der Menge an zweiten Pixeln P2ᵢⱼ des zweiten Bilds B2. Das Objekt 7 wird dann farbig im erzeugten farbigen Bild B3 dargestellt. **Figur 8** zeigt das auf diese Weise erzeugte farbige Bild B3. **Figur 8** beruht auf der **Figur 6****.** Gleiche Teile sind mit gleichen Bezugszeichen gekennzeichnet. Im Unterschied zum farbigen Bild B3 der **Figur 6** stellen im farbigen Bild B3 der **Figur 8** die Pixel P3₂₃, P3₂₄, P3₃₃ sowie P3₃₄, das Objekt 7 dar und weisen eine Farbinformation auf. Insofern wird zusätzlich zu der Umgebung 6, 6A und 6B das Objekt 7 farbig im farbigen Bild B3 dargestellt.

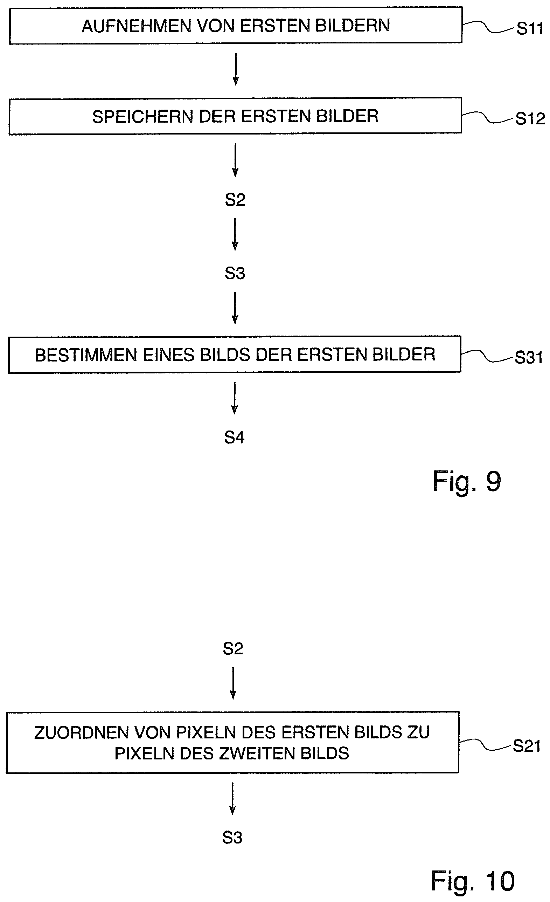

**Figur 9** zeigt eine dritte Ausführungsform des Verfahrens. Die Ausführungsform gemäß der **Figur 9** basiert auf der Ausführungsform gemäß der **Figur 2****.** Es wird daher auf die weiter oben gemachten Ausführungen verwiesen, die auch hier gelten. Im Unterschied zur Ausführungsform des Verfahrens gemäß der **Figur 2** weist die Ausführungsform des Verfahrens gemäß der **Figur 9** zwei weitere Verfahrensschritte auf, die den Verfahrensschritt S1 ersetzen und beispielsweise vor dem Verfahrensschritt S2 ausgeführt werden. Bei der in **Figur 9** dargestellten Ausführungsform des Verfahrens ist es im Verfahrensschritt S11 vorgesehen, dass das Aufnehmen des ersten Bilds B1 mit der Kamera 2 nicht nur ein Aufnehmen eines einzelnen ersten Bilds B1, sondern ein Aufnehmen mehrerer erster Bilder B1 umfasst. Jedes Bild der mehreren ersten Bilder B1 zeigt ausschließlich die Umgebung 6, 6A und 6B des Objekts 7 und somit nicht das Objekt 7 selbst. Mit anderen Worten ausgedrückt, wird jedes der mehreren ersten Bilder B1 zu Zeitpunkten aufgenommen, zu welchen das Objekt 7 sich nicht im Sichtfeld der Kamera 2 befindet. Insofern zeigt jedes Bild der mehreren ersten Bilder B1 nicht das Objekt 7, sondern nur die Umgebung 6, 6A und 6B im Sichtfeld der Kamera 2. Beispielsweise ist auf jedem Bild der mehreren ersten Bilder B1 kein Tier abgebildet, sondern nur die natürliche Umgebung des Tiers, beispielsweise ein Waldstück, welches sich im Sichtfeld des Objektivs 21 der Kamera 2 befindet. Beispielsweise werden die mehreren ersten Bilder B1 bei einer ausreichend natürlichen Helligkeit aufgenommen. Auf die oben gemachten Ausführungen wird verwiesen, die auch hier gelten. Jedes Bild der aufgenommenen mehreren Bilder B1 ist beispielsweise ausgestaltet wie in der **Figur 3** dargestellt. Auf die oben gemachten Ausführungen wird verwiesen, die auch hier gelten. Im Verfahrensschritt S12 werden die aufgenommenen mehreren Bilder B1 in der Speichereinheit 4 nach ihrer jeweiligen Aufnahme gespeichert.

Bei der in **Figur 9** dargestellten Ausführungsform des Verfahrens erfolgt beispielsweise nach dem Verfahrensschritt S3 ein Verfahrensschritt S31. Im Verfahrensschritt S31 erfolgt ein Bestimmen eines Bilds der aufgenommenen mehreren ersten Bilder B1 unter Verwendung der Prozessoreinheit 3. Dieses bestimmte Bild wird dann im Verfahrensschritt S4 und den weiteren Verfahrensschritten verwendet, welche sich dem Verfahrensschritt S31 anschließen. Insbesondere erfolgt das Bestimmen der Untermenge der Menge an ersten Pixeln P1ᵢⱼ des ersten Bilds B1 derart, dass eine Untermenge der Menge an ersten Pixeln P1ᵢⱼ des bestimmten Bilds der mehreren ersten Bilder B1 bestimmt wird. Beispielsweise ist es bei dieser Ausführungsform des Verfahrens vorgesehen, dass das bestimmte Bild der mehreren ersten Bilder B1 durch einen Benutzer oder durch die Prozessoreinheit 3 ausgewählt wird. Insbesondere wird das Bild der mehreren ersten Bilder B1 ausgewählt, welches den besten Kontrast aufweist. Alternativ ist es beispielsweise vorgesehen, zwei oder mehr Bilder der mehreren ersten Bilder B1 unter Verwendung der Prozessoreinheit 3 derart miteinander zu kombinieren, dass insbesondere Störungen (beispielsweise Schattierungen, Streulicht oder nicht interessierende Objekte) im kombinierten Bild nicht mehr oder kaum noch sichtbar sind. Insbesondere ist es vorgesehen, dass das Bestimmen des Bilds der mehreren ersten Bilder B1 derart erfolgt, dass das Bild unter Verwendung der Prozessoreinheit 3 auf Basis der mehreren ersten Bilder B1 berechnet wird.

**Figur 10** zeigt eine vierte Ausführungsform des Verfahrens. Die Ausführungsform gemäß der **Figur 10** basiert auf der Ausführungsform gemäß der **Figur 2****.** Es wird daher auf die weiter oben gemachten Ausführungen verwiesen, die auch hier gelten. Im Unterschied zur Ausführungsform des Verfahrens gemäß der **Figur 2** weist die Ausführungsform des Verfahrens gemäß der **Figur 10** einen Verfahrensschritt S21 auf, der beispielsweise zwischen dem Verfahrensschritt S2 und dem Verfahrensschritt S3 ausgeführt wird. Die Kamera 2 ist in der Regel ortsfest ausgebildet. Das erste Bild B1 und das zweite Bild B2 werden daher in der Regel mit demselben Sichtfeld der Kamera 2 aufgenommen. Aufgrund von äußeren Umständen kann es jedoch dazu kommen, dass die Kamera 2 sich zwischen dem ersten Zeitpunkt, zu welchem das erste Bild B1 aufgenommen wird, und zu dem zweiten Zeitpunkt, zu welchem das zweite Bild B2 aufgenommen wird, ein wenig bewegt, sodass das Sichtfeld der Kamera 2 zu dem ersten Zeitpunkt und zu dem zweiten Zeitpunkt etwas unterschiedlich ist. Zur Berücksichtigung dieses Effekts ist es bei der in **Figur 10** dargestellten Ausführungsform des Verfahrens vorgesehen, dass das aufgenommene erste Bild B1 und das aufgenommene zweite Bild B2 zueinander ausgerichtet werden. Mit anderen Worten ausgedrückt, wird jedes Pixel der ersten Menge an ersten Pixeln P1ᵢⱼ des ersten Bilds B1 genau einem korrespondierenden Pixel der zweiten Menge an zweiten Pixeln P2ᵢⱼ des zweiten Bilds B2 unter Verwendung der Prozessoreinheit 3 zugeordnet. Mit wiederum anderen Worten ausgedrückt, entspricht nach der Zuordnung jedes Pixel des ersten Bilds B1 einem korrespondierenden Pixel des zweiten Bilds B2. Beispielsweise ist es vorgesehen, eine Transformationsfunktion Φ zu ermitteln, so dass die ersten Pixel P1ᵢⱼ des ersten Bilds B1 den zweiten Pixeln P2ᵢⱼ des zweiten Bilds B2 entsprechen (also die ersten Pixel P1ᵢⱼ des ersten Bilds B1 mit den zweiten Pixeln P2ᵢⱼ des zweiten Bilds B2 korrespondieren). Dies erfolgt beispielsweise durch Minimierung des folgenden mathematischen Ausdrucks: $\begin{matrix}{\sum }_{l ∈ \left\{x, y\right\}} {\left‖\left|{∇}_{l}Bild1\right|-\left|{∇}_{l}Bild2\left(Φ\right)\right|\right‖}^{2} \\ = {\sum }_{l ∈ \left\{x, y\right\}} {\left‖\left|{∇}_{l}Bild1\right|\right‖}^{2} - 2 \left〈\left|{∇}_{l}Bild1\right|, \left|{∇}_{l}Bild2\left(Φ\right)\right|\right〉 + {\left‖\left|{∇}_{l}Bild2\left(Φ\right)\right|\right‖}^{2}\end{matrix}$ wobei
- Bild1 und Bild2 jeweils ein monochromatisches Pixelbild in gleicher Auflösung sind;
- Bild2(Φ) ein Pixelbild mit der gleichen Auflösung bezeichnet, welches durch eine örtliche Transformation Φ von Bild2 entstanden ist;
- ∇*ₓ* und ∇*_{y}* pixelweise Richtungsableitungen eines monochromatischen Bilds sind;
- |∇*ₗBild*| jeweils der pixelweise Absolutbetrag einer Richtungsableitung ist;
- ∥*A*∥² die Summe aller quadrierten Pixelwerte eines Bildes A bezeichnet; sowie
- 〈*A, B*〉 das vektorielle Skalarprodukt zweier als Vektoren aufgefasster Bilder A und B ist.

Die Minimierung des vorstehenden Ausdrucks ist äquivalent zu der Maximierung des Ausdrucks 〈|∇*ₗBild*1|*,* |∇*ₗBild*2(Φ)|〉*,* also der Korrelation der beiden absoluten Gradienten. Mit anderen Worten ausgedrückt, wird Bild2 derart verschoben, dass dessen absolute Gradienten mit denen von Bild1 soweit wie möglich übereinstimmen.

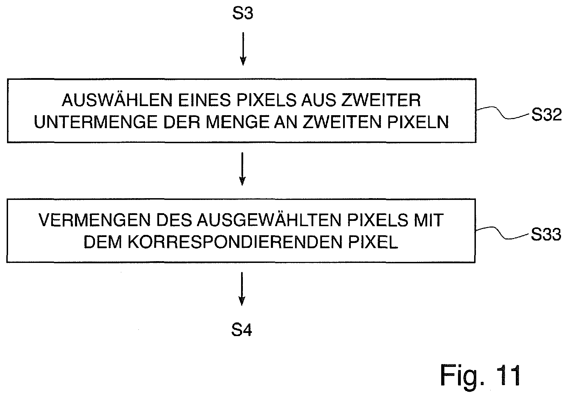

**Figur 11** zeigt eine Ausführungsform des erfindungsgemäßen Verfahrens. Die Ausführungsform gemäß der **Figur 11** basiert auf der Ausführungsform gemäß der **Figur 2****.** Es wird daher auf die weiter oben gemachten Ausführungen verwiesen, die auch hier gelten. Im Unterschied zur Ausführungsform des Verfahrens gemäß der **Figur 2** weist die Ausführungsform des erfindungsgemäßen Verfahrens gemäß der **Figur 11** zwei weitere Verfahrensschritte auf, die beispielsweise zwischen dem Verfahrensschritt S3 und dem Verfahrensschritt S4 ausgeführt werden. Die in **Figur 11** dargestellte Ausführungsform des erfindungsgemäßen Verfahrens berücksichtigt den Effekt, dass gewisse Details der im zweiten Bild B2 dargestellten Umgebung 6, 6A und 6B nicht sehr deutlich zu erkennen sind. Dies ist beispielsweise dadurch bedingt, dass das zweite Bild B2 bei nicht ausreichender Helligkeit, insbesondere in der Nacht aufgenommen wird. Um diesem Effekt entgegenzuwirken, ist es bei dem erfindungsgemäßen Verfahren vorgesehen, das zweite Bild B2 vor dem Eingeben der zweiten Untermenge der Menge an zweiten Pixeln P2ᵢⱼ des zweiten Bilds B2 als Eingangsgröße in die Prozessoreinheit 3 zu bearbeiten. Wenn ein Pixel der zweiten Untermenge der Menge an zweiten Pixeln P2ᵢⱼ des zweiten Bilds B2 ein vorgebbares Qualitätskriterium nicht erfüllt, wird dieses Pixel unter Verwendung der Prozessoreinheit 3 im Verfahrensschritt S32 ausgewählt. Das ausgewählte Pixel wird dann im Verfahrensschritt S33 mit einem korrespondierenden Pixel der ersten Menge an ersten Pixeln P1ᵢⱼ des ersten Bilds B1 unter Verwendung der Prozessoreinheit 3 vermengt. Mit anderen Worten ausgedrückt, wird das ausgewählte Pixel der zweiten Untermenge der Menge an zweiten Pixeln P2ᵢⱼ des zweiten Bilds B2 (also ein Pixel, das ausschließlich die Umgebung 6, 6A und 6B betrifft), mit Informationen über die Helligkeit eines zu dem ausgewählten Pixel korrespondierenden Pixels der ersten Menge an ersten Pixeln P1ᵢⱼ des ersten Bilds B1 (wobei auch das korrespondierende Pixel ebenfalls ausschließlich die Umgebung 6, 6A und 6B betrifft) angereichert. Beispielsweise erfolgt das Vermengen durch ein Ersetzen. Mit anderen Worten ausgedrückt, wird im zweiten Bild B2 ein Pixel, das ausschließlich die Umgebung 6, 6A und 6B betrifft, durch ein mit diesem Pixel korrespondierenden Pixel des ersten Bilds B1 (wobei das korrespondierende Pixel ebenfalls ausschließlich die Umgebung 6, 6A und 6B betrifft) ersetzt, wenn das Pixel im zweiten Bild B2 das vorgebbare Qualitätskriterium nicht erfüllt. Alternativ hierzu ist es beispielsweise vorgesehen, dass das Vermengen durch ein Alpha-Blending erzeugt wird. Beim Alpha-Blending wird dem ausgewählten Pixel der zweiten Untermenge der Menge an zweiten Pixeln P2ᵢⱼ des zweiten Bilds B2 eine gemischte Information auf Basis der Helligkeit des ausgewählten Pixels und des zum dem ausgewählten Pixel korrespondierenden Pixels der ersten Menge an ersten Pixeln P1ᵢⱼ des ersten Bilds B1 zugeordnet. Das vorgebbare Qualitätskriterium ist abhängig vom Kontrast. Beispielsweise ist eine Gewichtung des Alpha-Blendings abhängig vom Kontrast.

Bei sämtlichen Ausführungsformen des erfindungsgemäßen Verfahrens ist es sichergestellt, basierend auf dem zweiten Bild B2 mit Grauabstufungen das farbige Bild B3 zu erzeugen. Dabei wird im Unterschied zum bekannten Stand der Technik eine Untermenge der Menge an ersten Pixeln P1ᵢⱼ des ersten Bilds B1 verwendet, wobei die Pixel dieser Untermenge Farbinformationen aufweisen. Diese Farbinformationen werden dazu verwendet, eine Farbinformation für mindestens ein Pixel des zweiten, nicht farbigen Bilds B2 zu berechnen, um letztendlich das farbige Bild B3, das eine farbige Umgebung 6, 6A und 6B und das in der Umgebung 6, 6A und 6B angeordnete Objekt 7 aufweist, zu erzeugen.

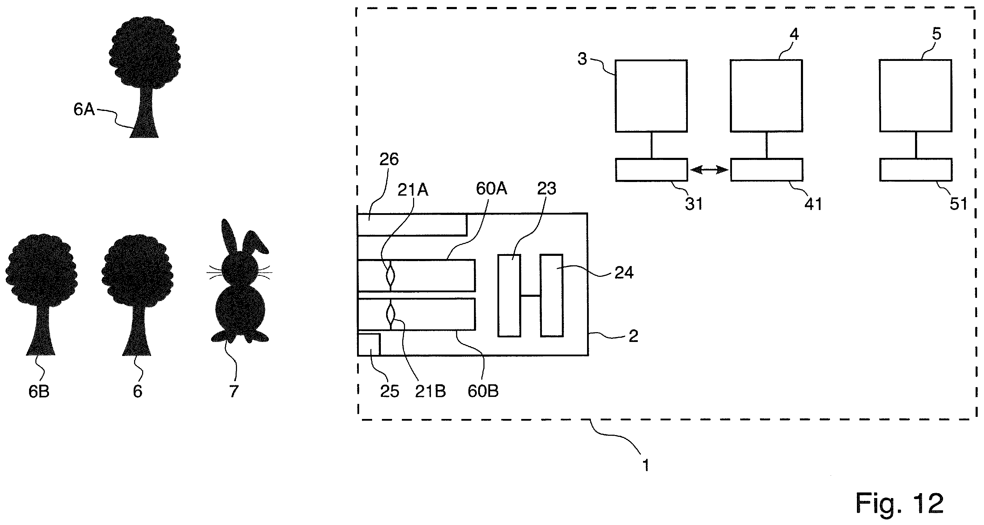

**Figur 12** zeigt eine weitere Ausführungsform eines erfindungsgemäßen Systems 1 zur Erzeugung eines farbigen Bilds, das ein in einer Umgebung 6, 6A sowie 6B angeordnetes Objekt 7 aufweist. Die weitere Ausführungsform gemäß der **Figur 12** beruht auf der Ausführungsform gemäß der **Figur 1****.** Gleiche Bauteile sind mit gleichen Bezugszeichen versehen. Auf die oben gemachten Ausführungen wird daher verwiesen, die auch hier gelten. Im Unterschied zur Ausführungsform gemäß der **Figur 1** weist die Kamera 2 der weiteren Ausführungsform gemäß der **Figur 12** eine erste Kameraeinheit 60A und eine zweite Kameraeinheit 60B auf. Die Erfindung ist aber nicht auf zwei Kameraeinheiten eingeschränkt. Vielmehr kann jede Anzahl an Kameraeinheiten verwendet werden, welche für die Erfindung geeignet ist. Die erste Kameraeinheit 60A weist ein erstes Objektiv 21A auf. Die zweite Kameraeinheit 60B weist ein zweites Objektiv 21B auf. Beispielsweise sind die erste Kameraeinheit 60A und die zweite Kameraeinheit 60B derart zueinander angeordnet, dass die Achsen der Objektive 21A, 21B der Kameraeinheiten 60A, 60B parallel zueinander ausgerichtet sind.

Beispielsweise erfolgt bei dem weiteren erfindungsgemäßen System 1 gemäß der **Figur 12** ein Aufnehmen des ersten Bilds B1 mit der ersten Kameraeinheit 60A. Wie weiter oben bereits ausgeführt, weist das erste Bild B1 die erste Menge an ersten Pixeln auf, die farbig ausgestaltet sind. Beispielsweise wird das erste Bild B1 bei einer ausreichend natürlichen Helligkeit aufgenommen, insbesondere bei Tageslicht. Das erste Bild B1 zeigt die Umgebung 6, 6A und 6B. Die Aufnahme des ersten Bilds B1 erfolgt demnach beispielsweise ohne die Verwendung eines Lichtblitzes. Das aufgenommene erste Bild B1 ist ein Farbbild. Mit anderen Worten ausgedrückt, ist das aufgenommene erste Bild B1 farbig ausgestaltet. Das Aufnehmen des zweiten Bilds B2 erfolgt bei dem erfindungsgemäßen System 1 gemäß der **Figur 12** beispielsweise mit der zweiten Kameraeinheit 60B, wobei das zweite Bild B2 zum einen die Umgebung 6, 6A, und 6B und zum anderen das in der Umgebung 6, 6A, und 6B angeordnete Objekt 7 aufweist. Beispielsweise ist das Objekt 7 ein Tier oder umfasst mehrere Tiere. Wie oben bereits weiter ausgeführt, weist das zweite Bild B2 die zweite Menge an zweiten Pixeln auf, die nicht farbig ausgestaltet sind. Mit anderen Worten ausgedrückt, ist das aufgenommene zweite Bild B2 kein Farbbild, sondern ein Bild, das zum einen die Umgebung 6, 6A, und 6B und zum anderen das in der Umgebung 6, 6A, und 6B angeordnete Objekt 7 in Grauabstufungen (im Extremfall schwarz oder weiß) darstellt. Beispielsweise wird das zweite Bild B2 unter Nutzung der an der Kamera 2 angeordneten Nahinfrarotlichtquelle 26 aufgenommen, welche das von ihr erzeugte Nahinfrarotlicht auf das Objekt 7 und die sich im Sichtfeld der zweiten Kameraeinheit 60B befindende Umgebung strahlt. Das Nahinfrarotlicht ist beispielsweise für ein Tier in der Regel nicht störend. Das zweite Bild B2 wird insbesondere zu einem Zeitpunkt aufgenommen, zu dem die natürliche Helligkeit nicht derart ausreichend für eine Aufnahme des zweiten Bilds B2 ist, um Konturen sowie Details der Umgebung 6, 6A, und 6B und/oder des Objekts 7 im zweiten Bild B2 zu erkennen (beispielsweise bei Dämmerung oder in der Nacht). Wie oben erläutert, ist das zweite Bild B2 jedoch kein Farbbild, sondern ein Bild, welches das im zweiten Bild B2 dargestellte Objekt 7 und dessen Umgebung 6, 6A, und 6B in Grauabstufungen (im Extremfall schwarz oder weiß) darstellt. Hinsichtlich sämtlicher weiterer Verfahrensschritte wird auf weiter oben verwiesen, die auch hier gelten, insbesondere die Ausführungen zu den **Figuren 2 bis 11****.**

Bei der weiteren Ausführungsform des erfindungsgemäßen Systems 1 gemäß der **Figur 12** ist es beispielsweise vorgesehen, dass die erste Menge der ersten Pixel des ersten Bilds B1 beispielsweise unter Verwendung der Prozessoreinheit 3 auf die zweite Menge der zweiten Pixel des zweiten Bilds B2 skaliert wird. Zusätzlich oder alternativ hierzu ist es vorgesehen, dass die zweite Menge der zweiten Pixel des zweiten Bilds B2 beispielsweise unter Verwendung der Prozessoreinheit 3 auf die erste Menge der ersten Pixel des ersten Bilds B1 skaliert wird.

Sämtliche vorstehenden und nachstehenden Ausführungsformen des erfindungsgemäßen Verfahrens sind nicht auf die erläuterte Reihenfolge der Verfahrensschritte beschränkt. Die Erfindung umfasst auch unterschiedliche Reihenfolgen der Verfahrensschritte, die im Sinne der Erfindung zur Lösung der Aufgabe geeignet sind. Alternativ oder zusätzlich ist bei dem erfindungsgemäßen Verfahren auch die parallele Ausführung von mindestens zwei Verfahrensschritten vorgesehen. Ferner sind die vorstehenden und nachstehenden Ausführungsformen des erfindungsgemäßen Verfahrens nicht auf den vollständigen Umfang sämtlicher weiter oben oder weiter unten genannter Verfahrensschritte beschränkt. Insbesondere ist es vorgesehen, dass bei weiteren Ausführungsformen einzelne oder mehrere der vorstehenden oder nachstehenden Verfahrensschritte ausgelassen werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1: System
- 2: Kamera
- 3: Prozessoreinheit
- 4: Speichereinheit
- 5: Anzeigeeinheit
- 6: Umgebung
- 6A: Umgebung
- 6B: Umgebung
- 7: Objekt

- 21: Objektiv
- 21A: erstes Objektiv
- 21B: zweites Objektiv
- 22: Infrarotsperrfilter
- 23: Sensoreinheit
- 24: Kommunikationsmodul
- 25: Bewegungssensor
- 26: Nahinfrarotlichtquelle

- 31: Kommunikationsmodul

- 41: Kommunikationsmodul

- 51: Kommunikationsmodul

- 60A: erste Kameraeinheit
- 60B: zweite Kameraeinheit

- A₁ bis A₀: Ausgangsgröße

- E1: erste Eingangsgröße
- E2: zweite Eingangsgröße
- B1: erstes Bild
- B2: zweites Bild
- B3: farbiges Bild

- P1₁₁: Pixel im ersten Bild
- P1₁₂: Pixel im ersten Bild
- P1₁₃: Pixel im ersten Bild
- P1₁₄: Pixel im ersten Bild
- P1₂₁: Pixel im ersten Bild
- P1₂₂: Pixel im ersten Bild
- P1₂₃: Pixel im ersten Bild
- P1₂₄: Pixel im ersten Bild
- P1₃₁: Pixel im ersten Bild
- P1₃₂: Pixel im ersten Bild
- P1₃₃: Pixel im ersten Bild
- P1₃₄: Pixel im ersten Bild
- P1₄₁: Pixel im ersten Bild
- P1₄₂: Pixel im ersten Bild
- P1₄₃: Pixel im ersten Bild
- P1₄₄: Pixel im ersten Bild

- P2₁₁: Pixel im zweiten Bild
- P2₁₂: Pixel im zweiten Bild
- P2₁₃: Pixel im zweiten Bild
- P2₁₄: Pixel im zweiten Bild
- P2₂₁: Pixel im zweiten Bild
- P2₂₂: Pixel im zweiten Bild
- P2₂₃: Pixel im zweiten Bild
- P2₂₄: Pixel im zweiten Bild
- P2₃₁: Pixel im zweiten Bild
- P2₃₂: Pixel im zweiten Bild
- P2₃₃: Pixel im zweiten Bild
- P2₃₄: Pixel im zweiten Bild
- P2₄₁: Pixel im zweiten Bild
- P2₄₂: Pixel im zweiten Bild
- P2₄₃: Pixel im zweiten Bild
- P2₄₄: Pixel im zweiten Bild

- P3₁₁: Pixel im farbigen Bild
- P3₁₂: Pixel im farbigen Bild
- P3₁₃: Pixel im farbigen Bild
- P3₁₄: Pixel im farbigen Bild
- P3₂₁: Pixel im farbigen Bild
- P3₂₂: Pixel im farbigen Bild
- P3₂₃: Pixel im farbigen Bild
- P3₂₄: Pixel im farbigen Bild
- P3₃₁: Pixel im farbigen Bild
- P3₃₂: Pixel im farbigen Bild
- P3₃₃: Pixel im farbigen Bild
- P3₃₄: Pixel im farbigen Bild
- P3₄₁: Pixel im farbigen Bild
- P3₄₂: Pixel im farbigen Bild
- P3₄₃: Pixel im farbigen Bild
- P3₄₄: Pixel im farbigen Bild

- S1 bis S8: Verfahrensschritte
- S11: Verfahrensschritt
- S12: Verfahrensschritt
- S21: Verfahrensschritt
- S31: Verfahrensschritt
- S32: Verfahrensschritt
- S33: Verfahrensschritt
- S61: Verfahrensschritt
- S62: Verfahrensschritt

## Patentansprüche

1. Verfahren zur Erzeugung eines farbigen Bilds (B3), das ein in einer Umgebung (6, 6A, 6B) angeordnetes Objekt (7) aufweist, mit den folgenden Verfahrensschritten:
- Aufnehmen eines ersten Bilds (B1) mit einer Kamera (2), wobei das erste Bild (B1) eine erste Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) aufweist, die farbig ausgestaltet sind, und wobei das erste Bild (B1) ausschließlich die Umgebung (6, 6A, 6B) zeigt;
- Aufnehmen eines zweiten Bilds (B2) mit der Kamera (2), wobei das zweite Bild (B2) eine zweite Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) aufweist, die nicht farbig ausgestaltet sind, und wobei das zweite Bild (B2) zum einen die Umgebung (6, 6A, 6B) und zum anderen ein in der Umgebung (6, 6A, 6B) angeordnetes Objekt (7) aufweist;
- Bestimmen einer ersten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) unter Verwendung einer Prozessoreinheit (3), wobei die erste Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) das Objekt (7) darstellt, und Bestimmen einer zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) unter Verwendung der Prozessoreinheit (3), wobei die zweite Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) die Umgebung (6, 6A, 6B) darstellt;
- Bestimmen einer Untermenge der Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) des ersten Bilds (B1) unter Verwendung der Prozessoreinheit (3), wobei die Untermenge nur Pixel des ersten Bilds (B1) umfasst, die korrespondierenden Pixeln der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) entsprechen, wobei die korrespondierenden Pixel der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) ausschließlich die Umgebung (6, 6A, 6B) aufweisen;
- Eingeben sowohl der Untermenge der Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) des ersten Bilds (B1) als auch der zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) als Eingangsgrößen (E1, E2) in die Prozessoreinheit (3);
- Berechnen einer Farbinformation für mindestens ein Pixel der zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) auf Basis mindestens eines Pixels der Untermenge der Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) des ersten Bilds (B1) unter Verwendung der Prozessoreinheit (3); sowie
- Erzeugen des farbigen Bilds (B3), das ein in der Umgebung (6, 6A, 6B) angeordnetes Objekt (7) aufweist, unter Verwendung der Prozessoreinheit (3) auf Basis des zweiten Bilds (B2) sowie auf Basis der berechneten Farbinformation des mindestens einen Pixels der zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2),
**dadurch gekennzeichnet, dass** das Verfahren vor dem Eingeben der zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) als Eingangsgröße (E1, E2) in die Prozessoreinheit (3) die folgenden Verfahrensschritte umfasst:
- Wenn ein Pixel der zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) ein vorgebbares Qualitätskriterium nicht erfüllt, Auswählen dieses Pixels der zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) unter Verwendung der Prozessoreinheit (3), wobei das vorgebbare Qualitätskriterium abhängig vom Kontrast ist; sowie
- Vermengen des ausgewählten Pixels der zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) mit einem korrespondierenden Pixel der ersten Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) des ersten Bilds (B1) unter Verwendung der Prozessoreinheit (3).

2. Verfahren nach Anspruch 1, wobei
- das Aufnehmen des ersten Bilds (B1) mit der Kamera (2) zu einem ersten Zeitpunkt erfolgt, und wobei
- das Aufnehmen des zweiten Bilds (B2) mit der Kamera (2) zu einem zweiten Zeitpunkt erfolgt, der unterschiedlich zum ersten Zeitpunkt ist.

3. Verfahren nach Anspruch 1 oder 2, wobei
- das Aufnehmen des ersten Bilds (B1) mit der Kamera (2) derart erfolgt, dass jedes Pixel der ersten Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) eine Farbinformation sowie eine Ortsinformation hinsichtlich seiner Lage im ersten Bild (B1) aufweist; und/oder wobei
- das Aufnehmen des zweiten Bilds (B2) mit der Kamera (2) derart erfolgt, dass jedes Pixel der zweiten Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) eine Graustufeninformation sowie eine Ortsinformation hinsichtlich seiner Lage im zweiten Bild (B2) aufweist.

4. Verfahren nach einem der vorangehenden Ansprüche, wobei das Berechnen derart erfolgt, dass eine Farbinformation für jedes Pixel der zweiten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) unter Verwendung der Prozessoreinheit (3) berechnet wird.

5. Verfahren nach einem der vorangehenden Ansprüche, wobei das Berechnen auf Basis der Untermenge der Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) des ersten Bilds (B1) erfolgt.

6. Verfahren nach einem der vorangehenden Ansprüche, wobei das Verfahren die folgenden Verfahrensschritte aufweist:
- Laden von Farbinformationen hinsichtlich des Objekts (7) für die erste Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) aus einer Speichereinheit (4) in die Prozessoreinheit (3); sowie
- Berechnen auf Basis der geladenen Farbinformationen eine Farbinformation für mindestens ein Pixel der ersten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) unter Verwendung der Prozessoreinheit (3), wobei das Erzeugen des farbigen Bilds (B3), welches das in der Umgebung angeordnete Objekt (7) aufweist, unter Verwendung der Farbinformation für das mindestens eine Pixel der ersten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) erfolgt.

7. Verfahren nach Anspruch 6, wobei das Berechnen auf Basis der geladenen Farbinformationen unter Verwendung der Prozessoreinheit (3) derart erfolgt, dass die Farbinformation für jedes Pixel der ersten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) berechnet wird, wobei das Erzeugen des farbigen Bilds (B3), welches das in der Umgebung (6, 6A, 6B) angeordnete Objekt (7) aufweist, unter Verwendung der Farbinformation für jedes Pixel der ersten Untermenge der Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) erfolgt.

8. Verfahren nach einem der vorangehenden Ansprüche, wobei das Verfahren einen der nachfolgenden Verfahrensschritte aufweist:
a) das Berechnen erfolgt (i) unter Verwendung eines mathematischen Modells, (ii) unter Verwendung von maschinellem Lernen und/oder (iii) unter Verwendung eines künstlichen neuronalen Netzwerks;
b) das Berechnen erfolgt (i) unter Verwendung eines einzigen mathematischen Modells und/oder (ii) unter Verwendung eines einzigen künstlichen neuronalen Netzwerks.

9. Verfahren nach einem der vorangehenden Ansprüche, wobei das erzeugte farbige Bild (B3), welches das in der Umgebung (6, 6A, 6B) angeordnete Objekt (7) aufweist, auf einer Anzeigeeinheit (5) dargestellt wird.

10. Verfahren nach einem der vorangehenden Ansprüche, wobei das Verfahren die folgenden Verfahrensschritte aufweist:
- das Aufnehmen des ersten Bilds (B1) mit der Kamera (2) umfasst ein Aufnehmen von mehreren ersten Bildern (B1), wobei jedes Bild der mehreren ersten Bilder (B1) ausschließlich die Umgebung (6, 6A, 6B) zeigt und wobei jedes Bild der mehreren ersten Bilder (B1) eine erste Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) aufweist, die farbig ausgestaltet sind; sowie
- Bestimmen eines Bilds der mehreren ersten Bilder (B1) unter Verwendung der Prozessoreinheit (3), wobei das Bestimmen der Untermenge der Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) derart erfolgt, dass eine Untermenge der Menge an ersten Pixel (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) des bestimmten Bilds der mehreren ersten Bilder (B1) bestimmt wird.

11. Verfahren nach Anspruch 10, wobei das Bestimmen des Bilds der mehreren ersten Bilder (B1) derart erfolgt, dass das Bild unter Verwendung von mindestens zwei Bildern der mehreren ersten Bilder (B1) unter Verwendung der Prozessoreinheit (3) berechnet wird.

12. Verfahren nach einem der vorangehenden Ansprüche, wobei jedem Pixel der ersten Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) des ersten Bilds (B1) genau ein korrespondierendes Pixel der zweiten Menge an zweiten Pixeln (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) des zweiten Bilds (B2) unter Verwendung der Prozessoreinheit (3) zugeordnet wird.

13. Verfahren nach einem der vorangehenden Ansprüche, wobei nach dem Aufnehmen des ersten Bilds (B1) mit der Kamera (2) das erste Bild (B1) in einer Bildspeichereinheit (4) gespeichert wird und zum Bestimmen der Untermenge der Menge an ersten Pixeln (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) des ersten Bilds (B1) in die Prozessoreinheit (3) geladen wird.

14. Computerprogrammprodukt mit einem Programmcode, der in eine Prozessoreinheit (3) eines Systems (1) zur Erzeugung eines farbigen Bilds (B3), das ein in einer Umgebung angeordnetes Objekt (7) aufweist, ladbar ist und bei Ausführung das System (1) derart steuert, dass ein Verfahren nach mindestens einem der vorangehenden Ansprüche ausgeführt wird.

15. System (1) zur Erzeugung eines farbigen Bilds (B3), das ein in einer Umgebung (6, 6A, 6B) angeordnetes Objekt (7) aufweist, mit
- einer Kamera (2) zur Aufnahme von Bildern (B1, B2), sowie mit
- einer Prozessoreinheit (3), in die ein Computerprogrammprodukt nach Anspruch 14 geladen ist.

16. System (1) nach Anspruch 15, wobei das System (1) mindestens eines der folgenden Merkmale aufweist:
- eine Speichereinheit (4);
- eine Anzeigeeinheit (5).

## Claims

1. Method for producing a colour image (B3) that contains an object (7) arranged in an environment (6, 6A, 6B), comprising the following method steps:
- capturing a first image (B1) using a camera (2), wherein the first image (B1) contains a first set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄), which are in colour, and wherein the first image (B1) shows only the environment (6, 6A, 6B);
- capturing a second image (B2) using the camera (2), wherein the second image (B2) contains a second set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄), which are not in colour, and wherein the second image (B2) contains the environment (6, 6A, 6B), on the one hand, and an object (7) arranged in the environment (6, 6A, 6B), on the other hand;
- determining a first subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) using a processor unit (3), wherein the first subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) depicts the object (7), and determining a second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) using the processor unit (3), wherein the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) depicts the environment (6, 6A, 6B);
- determining a subset of the set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) of the first image (B1) using the processor unit (3), wherein the subset comprises only pixels of the first image (B1) that correspond to corresponding pixels of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2), wherein the corresponding pixels of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) contain only the environment (6, 6A, 6B);
- inputting both the subset of the set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) of the first image (B1) and the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) into the processor unit (3) as input variables (E1, E2);
- computing colour information for at least one pixel of the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) on the basis of at least one pixel of the subset of the set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) of the first image (B1) using the processor unit (3); and
- producing the colour image (B3) that contains an object (7) arranged in the environment (6, 6A, 6B) on the basis of the second image (B2) and on the basis of the computed colour information of the at least one pixel of the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) using the processor unit (3),
**characterized in that** the method comprises the following method steps before the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) is input into the processor unit (3) as an input variable (E1, E2):
- if a pixel of the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) does not satisfy a predefinable quality criterion, selecting this pixel of the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) using the processor unit (3), wherein the predefinable quality criterion is dependent on the contrast; and
- blending the selected pixel of the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) with a corresponding pixel of the first set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) of the first image (B1) using the processor unit (3).

2. Method according to Claim 1, wherein
- the first image (B1) is captured at a first time using the camera (2), and wherein
- the second image (B2) is captured at a second time, different from the first time, using the camera (2).

3. Method according to Claim 1 or 2, wherein
- the first image (B1) is captured using the camera (2) such that each pixel of the first set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) comprises colour information and location information with regard to its position in the first image (B1); and/or wherein
- the second image (B2) is captured using the camera (2) such that each pixel of the second set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) comprises greyscale information and location information with regard to its position in the second image (B2).

4. Method according to one of the preceding claims, wherein the computing is carried out such that colour information is computed for each pixel of the second subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) using the processor unit (3).

5. Method according to one of the preceding claims, wherein the computing is carried out on the basis of the subset of the set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) of the first image (B1).

6. Method according to one of the preceding claims, wherein the method comprises the following method steps:
- loading colour information with regard to the object (7) for the first subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) from a storage unit (4) into the processor unit (3); and
- computing colour information for at least one pixel of the first subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) on the basis of the loaded colour information using the processor unit (3), wherein the colour image (B3) that contains the object (7) arranged in the environment is produced using the colour information for the at least one pixel of the first subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2).

7. Method according to Claim 6, wherein the computing is carried out on the basis of the loaded colour information using the processor unit (3) such that the colour information is computed for each pixel of the first subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2), wherein the colour image (B3) that contains the object (7) arranged in the environment (6, 6A, 6B) is produced using the colour information for each pixel of the first subset of the set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2).

8. Method according to one of the preceding claims, wherein the method comprises one of the following method steps:
a) the computing is carried out (i) using a mathematical model, (ii) using machine learning and/or (iii) using an artificial neural network;
b) the computing is carried out (i) using a single mathematical model and/or (ii) using a single artificial neural network.

9. Method according to one of the preceding claims, wherein the produced colour image (B3) that contains the object (7) arranged in the environment (6, 6A, 6B) is displayed on a display unit (5).

10. Method according to one of the preceding claims, wherein the method comprises the following method steps:
- capturing the first image (B1) using the camera (2) comprises capturing multiple first images (B1), wherein each image of the multiple first images (B1) shows only the environment (6, 6A, 6B) and wherein each image of the multiple first images (B1) contains a first set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄), which are in colour; and
- determining one image of the multiple first images (B1) using the processor unit (3), wherein the subset of the set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) is determined such that a subset of the set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) of the determined image of the multiple first images (B1) is determined.

11. Method according to Claim 10, wherein the image of the multiple first images (B1) is determined such that the image is computed using at least two images of the multiple first images (B1) using the processor unit (3).

12. Method according to one of the preceding claims, wherein each pixel of the first set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) of the first image (B1) is assigned exactly one corresponding pixel of the second set of second pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) of the second image (B2) using the processor unit (3).

13. Method according to one of the preceding claims, wherein, after the first image (B1) has been captured using the camera (2), the first image (B1) is stored in an image storage unit (4) and is loaded into the processor unit (3) in order to determine the subset of the set of first pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) of the first image (B1).

14. Computer program product containing a program code that is able to be loaded into a processor unit (3) of a system (1) for producing a colour image (B3) that contains an object (7) arranged in an environment and, when it is executed, controls the system (1) such that a method according to at least one of the preceding claims is carried out.

15. System (1) for producing a colour image (B3) that contains an object (7) arranged in an environment (6, 6A, 6B), comprising
- a camera (2) for capturing images (B1, B2), and comprising
- a processor unit (3) into which a computer program product according to Claim 14 is loaded.

16. System (1) according to Claim 15, wherein the system (1) has at least one of the following features:
- a storage unit (4);
- a display unit (5).

## Revendications

1. Procédé de génération d'une image couleur (B3), qui comporte un objet (7) disposé dans un environnement (6, 6A, 6B), avec les étapes de procédé suivantes :
- enregistrement d'une première image (B1) avec une caméra (2), la première image (B1) comportant un premier ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) qui sont en couleur et la première image (B1) n'illustrant que l'environnement (6, 6A, 6B) ;
- enregistrement d'une deuxième image (B2) avec la caméra (2), la deuxième image (B2) comportant un deuxième ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) qui ne sont pas en couleur, et la deuxième image (B2) comportant d'une part l'environnement (6, 6A, 6B) et d'autre part un objet (7) disposé dans l'environnement (6, 6A, 6B) ;
- détermination d'un premier sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) en utilisant une unité de processeur (3), le premier sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) représentant l'objet (7), et détermination d'un deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) en utilisant l'unité de processeur (3), le deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) représentant l'environnement (6, 6A, 6B) ;
- détermination d'un sous-ensemble de l'ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) de la première image (B1) en utilisant l'unité de processeur (3), le sous-ensemble comprenant seulement des pixels de la première image (B1), qui correspondent à des pixels correspondants de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2), les pixels correspondants de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) comportant exclusivement l'environnement (6, 6A, 6B) ;
- entrée à la fois du sous-ensemble de l'ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) de la première image (B1) et du deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) en tant que variables d'entrée (E1, E2) dans l'unité de processeur (3) ;
- calcul d'une information de couleur pour au moins un pixel du deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) sur la base d'au moins un pixel du sous-ensemble de l'ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) de la première image (B1) en utilisant l'unité de processeur (3) ; ainsi que
- génération de l'image couleur (B3), qui comporte un objet (7) disposé dans l'environnement (6, 6A, 6B), en utilisant l'unité de processeur (3) sur la base de la deuxième image (B2) et sur la base de l'information de couleur calculée de l'au moins un pixel du deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2),
**caractérisé en ce que** le procédé comprend avant d'entrer le deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) en tant que variable d'entrée (E1, E2) dans l'unité de processeur (3) les étapes de procédé suivantes :
- lorsqu'un pixel du deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) ne remplit pas un critère de qualité pouvant être prédéfini, sélection dudit pixel du deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) en utilisant l'unité de processeur (3), le critère de qualité pouvant être prédéfini dépendant du contraste ; ainsi que
- mélange du pixel sélectionné du deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) avec un pixel correspondant du premier ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) de la première image (B1) en utilisant l'unité de processeur (3).

2. Procédé selon la revendication 1,
- la première image (B1) étant enregistrée avec la caméra (2) à un premier instant, et
- la deuxième image (B2) étant enregistrée avec la caméra (2) à un deuxième instant, qui est différent du premier instant.

3. Procédé selon la revendication 1 ou 2,
- la première image (B1) étant enregistrée avec la caméra (2) de telle manière que chaque pixel du premier ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) comporte une information de couleur ainsi qu'une information de localisation concernant sa position sur la première image (B1) ; et/ou
- la deuxième image (B2) étant enregistrée avec la caméra (2) de telle manière que chaque pixel du deuxième ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) comporte une information de niveaux de gris ainsi qu'une information de localisation concernant sa position sur la deuxième image (B2).

4. Procédé selon l'une des revendications précédentes, le calcul étant effectué de telle manière qu'une information de couleur pour chaque pixel du deuxième sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) est calculée en utilisant l'unité de processeur (3).

5. Procédé selon l'une des revendications précédentes, le calcul étant effectué sur la base du sous-ensemble de l'ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) de la première image (B1).

6. Procédé selon l'une des revendications précédentes, le procédé comportant les étapes de procédé suivantes :
- chargement d'informations de couleur sur l'objet (7) pour le premier sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) d'une unité de stockage (4) dans l'unité de processeur (3) ; ainsi que
- calcul sur la base de l'information de couleur chargée d'une information de couleur pour au moins un pixel du premier sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) en utilisant l'unité de processeur (3), la génération de l'image couleur (B3), qui comporte l'objet (7) disposé dans l'environnement, étant effectuée en utilisant l'information de couleur pour l'au moins un pixel du premier sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2).

7. Procédé selon la revendication 6, le calcul étant effectué sur la base des informations de couleur chargées en utilisant l'unité de processeur (3) de telle manière que les informations de couleur pour chaque pixel du premier sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) sont calculées, la génération de l'image couleur (B3), qui comporte l'objet (7) disposé dans l'environnement (6, 6A, 6B), étant effectuée en utilisant l'information de couleur pour chaque pixel du premier sous-ensemble de l'ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2).

8. Procédé selon l'une des revendications précédentes, le procédé comportant une des étapes de procédé suivantes :
a) le calcul est effectué (i) en utilisant un modèle mathématique, (ii) en utilisant l'apprentissage automatique, et/ou (iii) en utilisant un réseau neuronal artificiel ;
b) le calcul est effectué (i) en utilisant un modèle mathématique unique et/ou (ii) en utilisant un réseau neuronal artificiel unique.

9. Procédé selon l'une des revendications précédentes, l'image couleur (B3) générée, qui comporte l'objet (7) disposé dans l'environnement (6, 6A, 6B), étant représentée sur une unité d'affichage (5).

10. Procédé selon l'une des revendications précédentes, le procédé comportant les étapes de procédé suivantes :
- l'enregistrement de la première image (B1) avec la caméra (2) comprend un enregistrement de plusieurs premières images (B1), chaque image des plusieurs premières images (B1) illustrant exclusivement l'environnement (6, 6A, 6B) et chaque image des plusieurs premières images (B1) comportant un premier ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄), qui sont en couleur ; ainsi que
- détermination d'une image des plusieurs premières images (B1) en utilisant l'unité de processeur (3), la détermination du sous-ensemble de l'ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) étant effectuée de telle manière qu'un sous-ensemble de l'ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) de l'image déterminée des plusieurs premières images (B1) est déterminé.

11. Procédé selon la revendication 10, la détermination de l'image des plusieurs premières images (B1) étant effectuée de telle manière que l'image est calculée en utilisant au moins deux images des plusieurs premières images (B1) en utilisant l'unité de processeur (3).

12. Procédé selon l'une des revendications précédentes, précisément un pixel correspondant du deuxième ensemble de deuxièmes pixels (P2₁₁, P2₁₂, P2₁₃, P2₁₄, P2₂₁, P2₂₂, P2₂₃, P2₂₄, P2₃₁, P2₃₂, P2₃₃, P2₃₄, P2₄₁, P2₄₂, P2₄₃, P2₄₄) de la deuxième image (B2) étant associé à chaque pixel du premier ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) de la première image (B1) en utilisant l'unité de processeur (3).

13. Procédé selon l'une des revendications précédentes, la première image (B1) étant stockée dans une unité de stockage d'images (4) après l'enregistrement de la première image (B1) avec la caméra (2) et étant chargée dans l'unité de processeur (3) pour déterminer le sous-ensemble de l'ensemble de premiers pixels (P1₁₁, P1₁₂, P1₁₃, P1₁₄, P1₂₁, P1₂₂, P1₂₃, P1₂₄, P1₃₁, P1₃₂, P1₃₃, P1₃₄, P1₄₁, P1₄₂, P1₄₃, P1₄₄) de la première image (B1).

14. Produit de programme informatique avec un code de programme qui peut être chargé dans une unité de processeur (3) d'un système (1) pour générer une image en couleur (B3), qui comporte un objet (7) disposé dans un environnement, et qui, lorsqu'il est exécuté, commande le système (1) de telle manière qu'un procédé selon au moins l'une des revendications précédentes est exécuté.

15. Système (1) pour générer une image couleur (B3), qui comporte un objet (7) disposé dans un environnement (6, 6A, 6B), avec
- une caméra (2) pour enregistrer des images (B1, B2), ainsi qu'avec
- une unité de processeur (3), dans laquelle est chargé un produit de programme informatique selon la revendication 14.

16. Système (1) selon la revendication 15, le système (1) comportant au moins une des caractéristiques suivantes :
- une unité de stockage (4) ;
- une unité d'affichage (5).
